# EUROPÄISCHE PATENTSCHRIFT

(11) **EP 3 115 507 B1**
(45) Veröffentlichungstag und Bekanntmachung des Hinweises auf die Patenterteilung: **11.03.2020**
(21) Anmeldenummer: 16175421.3
(22) Anmeldetag: 21.06.2016
(51) Int. Cl.: E01C 23/088

(54) **BODENBEARBEITUNGSMASCHINE UND VERFAHREN ZUM VERSCHLEISSOPTIMIERTEN BETRIEB EINER BODENBEARBEITUNGSMASCHINE**
SOIL WORKING MACHINE AND METHOD FOR WEAR-OPTIMIZED OPERATION OF A SOIL WORKING MACHINE
MACHINE DE TRAVAIL DU SOL ET PROCEDE DE FONCTIONNEMENT OPTIMISE CONTRE L'USURE D'UNE MACHINE DE TRAVAIL DU SOL

(30) Priorität: 10.07.2015 DE 102015111249
(43) Veröffentlichungstag der Anmeldung: 11.01.2017
(60) Teilanmeldung: 20152400.6
(73) Patentinhaber: Wirtgen GmbH, 53578 Windhagen (DE)
(72) Erfinder: Barimani, Cyrus, 53639 Königswinter (DE); Wagner, Stefan, 53604 Bad Honnef (DE); Hähn, Günter, 53639 Königswinter (DE)
(74) Vertreter: Herrmann, Jochen

(56) Entgegenhaltungen:
- DE-A1- 10 213 017
- DE-A1-102008 045 470
- DE-A1-102014 015 661
- US-A1- 2004 120 766

## Beschreibung

Beim Ausbau von Straßen mittels Fräsen sowie beim Abbau von Lagerstätten mittels Surface Minern, ebenfalls durch Fräsen, unterliegen die eingesetzten Bodenbearbeitungswerkzeuge und dabei insbesondere die Fräsmeißel einem kontinuierlichen Verschleißprozess. Erreichen die Werkzeuge einen bestimmten Verschleißzustand, ist ein Austausch zweckmäßig, da sonst der weitere Prozess an Effizienz (Wirkungsgrad) verliert.

Der Verschleißzustand der Meißel und Meißelhalter kann durch visuelle Kontrolle durch den Maschinenfahrer beurteilt werden. Der Verschleißzustand der Meißelhalter wird dabei üblicherweise über so genannte Verschleißmarkierungen beurteilt. Der Verschleißzustand der Meißel wird über den Längenverschleiß und die Rotationssymmetrie des Verschleißbildes beurteilt.

Die Kontrolle des Verschleißzustandes der Meißel und Halter ist sehr zeitintensiv und, da in dieser Zeit nicht produziert werden kann, unproduktiv. Der Gesamtprozess wird gestört und damit die Verfügbarkeit der Bodenbearbeitungsmaschine zusätzlich vermindert. Daher ist es vorteilhaft, wenn die erwarteten Inspektionsintervalle sehr lange, oder auf den Arbeitsablauf optimiert sind und damit die erforderliche Häufigkeit der Kontrollen gering sind, bzw. diese auf für den Betrieb der Maschine günstige Zeitpunkte fallen.

Auch das Auswechseln der Bodenbearbeitungswerkzeuge, also der Meißel und gegebenenfalls der zugehörigen Meißelhalter, erfordert einen hohen Zeitbedarf, in dem die Bodenbearbeitungsmaschine nicht eingesetzt werden kann. Zusätzlich fallen Kosten für die zu ersetzenden Werkzeuge an. Die Instandhaltung der Bodenbearbeitungswerkzeuge stellt daher einen großen Kostenfaktor im Betrieb der Bodenbearbeitungsmaschine dar.

Der Verschleiß der Bodenbearbeitungswerkzeuge wird wesentlich von den Materialeigenschaften des zu bearbeitenden Untergrundes und von den Maschinenparametern, mit denen die Bodenbearbeitungsmaschine betrieben wird, beeinflusst. Ein Maschinenführer wird versuchen, die Maschinenparameter so einzustellen, dass ökonomische Vorgaben, beispielsweise die Bearbeitung einer bestimmten Fläche in einer vorgegebenen oder in einer möglichst kurzen Zeit, eingehalten werden, ohne dabei die Bodenbearbeitungsmaschine mehr als erforderlich zu belasten. Diese Einstellung erfolgt jedoch subjektiv und hängt wesentlich von der Erfahrung des jeweiligen Maschinenführers ab. Häufig werden Einstellungen der Maschinenparameter gewählt, welche eine hohe Arbeitsleistung ergeben, jedoch den Verschleiß der Bodenbearbeitungswerkzeuge nicht ausreichend berücksichtigen. Dies führt dazu, dass die Bodenbearbeitungswerkzeuge vorzeitig verschleißen und getauscht werden müssen. Auch kann es vorkommen, dass verschiedene Einstellkombinationen der Maschinenparameter zu vergleichbaren Arbeitsleistungen, jedoch zu stark unterschiedlichem Verschleißverhalten führen. Während des Arbeitsprozesses können die Materialeigenschaften des zu bearbeitenden Untergrundes wechseln. Beispielsweise kann es im Bergbau vorkommen, dass beim Überfahren eines abzutragenden Rohstoffvorkommens die Härte des Rohstoffmaterials plötzlich ansteigt (Hard-Spot). Dann tritt an den Werkzeugen verstärkt Verschleiß auf.

Aus der DE 10 2008 045 470 A1 ist ein Verfahren zur quantitativen Verschleißbestimmung von Bodenbearbeitungswerkzeugen (Meißel und Meißelhalter) einer Fräsmaschine bekannt. Dabei wird die Position wenigstens eines Punktes des Bodenbearbeitungswerkzeuges im Raum erfasst. Dieses Messergebnis wird dann mit einem Referenzwert verglichen, um den Verschleiß des Werkzeuges quantitativ zu erfassen. Zur Durchführung des Verfahrens ist ein vorzugsweise berührungslos arbeitendes Messsystem vorzusehen, welches unter den rauen Umgebungsbedingungen im Bereich der Fräswalze zuverlässig arbeitet und mit dem die automatisierte Verschleißbestimmung erfolgen kann. Das Verfahren ermöglicht die automatisierte Erkennung des Verschleißzustandes der Bodenbearbeitungswerkzeuge, so dass diese bei Erreichen der Verschleißgrenze ausgetauscht werden können, ohne jedoch die Verschleißgeschwindigkeit selbst zu beeinflussen.

Die DE 10 2014 015 661 A1 beschreibt eine Fräsmaschine zur Bodenbearbeitung, beispielsweise im Straßenbau. Die fahrbare Fräsmaschine weist einen Rotor mit daran angebrachten Fräswerkzeugen auf. Die Arbeitshöhe des Rotors und damit die Frästiefe, die Drehzahl des Rotors sowie die Fahrgeschwindigkeit sind einstellbar. Weiterhin kann der Abstand eines Bemessungsmechanismus zum Rotor eingestellt und darüber der Zerkleinerungsgrad des gefrästen Materials beeinflusst werden. Der Fräsmaschine sind verschiedene Sensoren zur Bestimmung der Bodencharakteristik (z.B. der Dichte, der Materialdicke oder dem Nachweis unterirdisch vorliegender Objekte), der Fahrgeschwindigkeit, der Arbeitshöhe des Rotors, der Drehzahl des Rotors oder der Ausrichtung des Bemessungsmechanismus zugeordnet. Auf Basis der Sensorsignale kann die Fräsmaschine derart gesteuert werden, dass eine Kollision des Rotors mit unterirdisch vorliegenden Objekten und damit eine Beschädigung des Rotors vermieden wird. Weiterhin kann die Fräsmaschine in Abhängigkeit von der Bodendichte oder der Materialdicke derart gesteuert werden, dass ein gewünschtes Mischungsverhältnis des abgetragenen Materials erreicht wird. Die Geschwindigkeit der Fräsmaschine und die Drehzahl des Rotors werden in Abhängigkeit von der Bodencharakteristik so eingestellt, dass in effizientester Weise das Material auf die erforderliche Gradierung bzw. Körnung geschnitten wird. So kann bei einer hohen Dichte des Materials die Fahrgeschwindigkeit und/oder die Drehzahl des Rotors reduziert werden, um die erforderliche Gradierung zu erreichen. Nachteilig hierbei ist, dass bei der Einstellung der Maschinenparameter der Verschleiß des Rotors bzw. der daran angebrachten Fräswerkzeuge nicht berücksichtigt wird. Maschinenparameter, welche eine hohe Effizienz der Schnittleistung ergeben, können so zu einem hohen Verschleiß mit entsprechend kurzen Wechselintervallen und den damit verbundenen hohen Kosten führen.

In US 2004/0120766 A1 ist eine Vorrichtung zur Bearbeitung der Oberfläche einer Fahrbahn beschrieben. Dabei ist ein Schleifkopf verwendet, der über einen Antriebsmotor in Rotationsbewegung versetzt werden kann. Der Schleifkopf ist an einem Hauptrahmen der Maschine aufgehangen und kann gegenüber einem Überkopf-Rahmen in seiner Höhe verstellt werden. Es sind Sensoren vorgesehen, die Betriebsparameter der Bodenbearbeitungsmaschine überwachen, um eine optimale Bewegungsgeschwindigkeit der Maschine einzustellen.

In der DE 102 13 017 A1 ist ein Verfahren zum Optimieren eines Schneidprozesses bei Straßenfräsmaschinen beschrieben. Dabei wird eine Fräswalze verwendet, die an ihrem Außenumfang mit abstehenden Bearbeitungswerkzeugen bestückt ist. Während des Bearbeitungseingriffes kommen diese Werkzeuge mit der zu bearbeitenden Straßenfahrbahn in Kontakt. Um die dabei entstehende und aus dem Bearbeitungsprozess resultierende Wärme abführen zu können, werden die Werkzeuge mit einer Kühlflüssigkeit gekühlt. Für einen optimalen Kühlbetrieb, wird die Menge des Kühlwassers geregelt.

Es ist Aufgabe der Erfindung, eine Bodenbearbeitungsmaschine und ein Verfahren zum Betrieb einer solchen Bodenbearbeitungsmaschine bereitzustellen, welche einen wirtschaftlich optimierten Bearbeitungsprozess ermöglichen.

Die Aufgabe wird durch ein Verfahren zum verschleißoptimierten Betrieb einer Bodenbearbeitungsmaschine, insbesondere einer Straßenfräsmaschine, einem Surface Miner oder dergleichen, gelöst, wobei zumindest eine Materialeigenschaft des abzutragenden Materials in einer Verarbeitungseinrichtung erfasst wird und wobei zumindest ein Maschinenparameter eines Maschinenparametersatzes der Bodenbearbeitungsmaschine in Abhängigkeit von zumindest der einen Materialeigenschaft als Soll-Maschinenparameter zur Einstellung des verschleißoptimierten Betriebs ermittelt wird. Die Geschwindigkeit, mit der Bodenbearbeitungswerkzeuge der Bodenbearbeitungsmaschine verschleißen, hängt im Wesentlichen von zwei Faktoren ab. Zum einen die Materialeigenschaften des abzutragenden Materials, zum anderen die vorliegenden Maschinenparameter, mit denen die Bodenbearbeitungsmaschine betrieben wird. Während die Materialeigenschaften durch das zu bearbeitende Material vorgegeben sind, werden die Maschinenparameter erfindungsgemäß dahingehend eingestellt, dass die Bodenbearbeitungsmaschine mit einem möglichst geringen Verschleiß oder mit einer vorgegebenen bzw. zulässigen Verschleißgeschwindigkeit der Bodenbearbeitungswerkzeuge betrieben wird. Die dazu jeweils geeigneten Maschinenparameter sind abhängig von den vorliegenden Materialeigenschaften. Daher ist es vorgesehen, dass die Materialeigenschaften von der Verarbeitungseinrichtung erfasst und bei der Ermittlung des zumindest einen Soll-Maschinenparameters berücksichtigt werden. Das Erfassen der Materialeigenschaften bedeutet im Sinne der Erfindung, dass diese beispielsweise eingegeben oder der Verarbeitungseinrichtung über entsprechende Signalleitungen zugeführt werden oder dass der Verarbeitungseinrichtung Daten eingegeben oder zugeführt werden, aus denen sie die Materialeigenschaften bestimmt. Verschiedene, den Verschleiß beeinflussende Maschinenparameter sind vorteilhaft in einem Maschinenparametersatz, mit dem die Bodenbearbeitungsmaschine betrieben wird, zusammengefasst. Abhängig von den vorliegenden Materialeigenschaften werden jeweils unterschiedliche Sollwerte für einen oder mehrere Maschinenparameter des Maschinenparametersatzes vorgesehen, welche bei den vorliegenden Materialeigenschaften zu einer geringen oder einer vorgegebenen Verschleißgeschwindigkeit der Bodenbearbeitungswerkzeuge führen. Die Erfindung ermöglicht so einen verschleißoptimierten Betrieb der Bodenbearbeitungsmaschine, durch den die Wartungskosten für die Überprüfung und den Austausch der Bearbeitungswerkzeuge gering gehalten werden. Überprüfungszyklen zur Kontrolle des Verschleißzustandes der Bodenbearbeitungswerkzeuge können verlängert werden. Die Bodenbearbeitungswerkzeuge müssen seltener gewechselt werden, was zu verlängerten Wartungsintervallen und geringeren Ersatzteilkosten führt. Weiterhin kann der Verschleiß so beeinflusst werden, dass eine Wartung bzw. ein Austausch der Bodenbearbeitungswerkzeuge zu einem günstigen Zeitpunkt, beispielsweise während eines ohnehin vorgesehenen Stillstandes der Bodenbearbeitungsmaschine, erfolgen kann. Dadurch können die Ausfallkosten gering gehalten werden.

Erfindungsgemäß ist es vorgesehen, dass der Verarbeitungseinrichtung zumindest eine Recheneinheit und eine Speichereinheit zugeordnet sind, dass in der Speichereinheit die zumindest eine Materialeigenschaft und/oder der zumindest eine Jobparameter und/oder zumindest ein Vorgabe-Maschinenparameter gespeichert wird, dass in der Speichereinheit Kennfelder oder funktionale Zusammenhänge zur Ermittlung des zumindest einen Soll-Maschinenparameters aus der zumindest einen Materialeigenschaft und/oder aus dem zumindest einen Jobparameter und/oder aus dem zumindest einen Vorgabe-Maschinenparameter und/oder aus zumindest einem Maschinenparameter hinterlegt sind und dass die Recheneinheit den zumindest einen Soll-Maschinenparameter mit Hilfe der Kennfelder oder der funktionalen Zusammenhänge bestimmt. Der Verschleiß der Bodenbearbeitungswerkzeuge ist abhängig von dem oder den zu optimierenden Maschinenparametern, den Vorgabe-Maschinenparametern, den Materialeigenschaften und den Jobparametern. Dieser Zusammenhang kann in den Kennfeldern, beispielsweise in Form einer Datenbank, oder den funktionalen Zusammenhängen hinterlegt werden. Der Verschleiß wird vorgegeben, beispielsweise durch die Forderung nach einem möglichst geringen Verschleiß oder einem "Soll-Verschleiß", so dass, wie beschrieben, ein günstiger Wechselzeitpunkt für die Bodenbearbeitungswerkzeuge erreicht wird. Damit können bei bekannten Jobparametern und Wunsch-Maschinenparametern der oder die Soll-Maschinenparameter, bei denen das geforderte Verschleißverhalten vorliegt, mit Hilfe der Kennfelder oder der funktionalen Zusammenhänge ermittelt werden. Das Verfahren lässt sich vorteilhaft und mit geringem Aufwand als Softwarelösung in einer bestehenden Verarbeitungseinrichtung einer vorhandenen Maschinensteuerung umsetzen.

Ein wirtschaftlicher Betrieb der Bodenbearbeitungsmaschine, der sowohl den Verschleiß und damit die Wartungskosten als auch die von der Bodenbearbeitungsmaschine geleistete Arbeit und damit den erzielten Umsatz berücksichtigt, kann dadurch erreicht werden, dass zusätzlich zu dem Verschleiß die Arbeitsleistung der Bodenbearbeitungsmaschine optimiert wird. Der oder die Maschinenparameter können beispielsweise so eingestellt werden, dass eine möglichst hohe Arbeitsleistung bei einem möglichst geringen Verschleiß der Bodenbearbeitungswerkzeuge erreicht wird.

Vorteilhaft kann es vorgesehen sein, dass der wenigstens eine Soll-Maschinenparameter oder eine Verrechnung desselben einer Betriebsperson, vorzugsweise während des Betriebsprozesses, angegeben, insbesondere angezeigt, oder in einer auf die Bodenbearbeitungsmaschine einwirkenden Steuereinheit verarbeitet wird, um wenigstens einen Soll-Maschinenparameter einzustellen oder vorzugeben. Der Betriebsperson kann so, beispielsweise während eines Fräsvorgangs, ein mögliches Optimierungspotential bei der Auswahl der Maschinenparameter aufgezeigt werden. Dazu kann der Betriebsperson während des Fräsvorgangs empfohlen werden, einen oder mehrere Maschinenparameter, beispielsweise eine Fräswalzendrehzahl, zu verändern. Dies kann durch eine direkte Anzeige des einzustellenden Wertes oder durch Anzeige einer Verstellrichtung des Maschinenparameters, beispielsweise durch Anzeigen eines entsprechenden Pfeils, erfolgen. Die Betriebsperson kann dann den oder die jeweiligen Soll-Maschinenparameter über vorhandene Eingabemittel in die Steuereinheit eingeben. Weiterhin kann es vorgesehen sein, dass der oder die ermittelten Soll-Maschinenparameter direkt an die Steuereinheit der Bodenbearbeitungsmaschine weitergeleitet und von dieser eingestellt werden.

Vorteilhaft kann es vorgesehen sein, dass die Bedienperson vor Beginn oder während eines Arbeitsprozesses der Bodenbearbeitungsmaschine wenigstens eine weitere Materialeigenschaft des abzutragenden Materials und einen oder mehrere Vorgabe-Maschinenparameter und/oder Jobparameter in die Verarbeitungseinrichtung eingibt, welche bei der Ermittlung des oder der Soll-Maschinenparameter oder der Verrechnung des oder der Soll-Maschinenparameter berücksichtigt werden. Die Vorgabe von Maschinenparametern bzw. Jobparametern ermöglichen die Berücksichtigung von wirtschaftlichen Vorgaben, die durch die Arbeit der Bodenbearbeitungsmaschine erreicht werden sollen. So kann beispielsweise als Vorgabe-Maschinenparameter eine Vorschubgeschwindigkeit angegeben werden. Unter Berücksichtigung der eingegebenen Materialeigenschaften werden dann die weiteren Maschinenparameter des Maschinenparametersatzes so angepasst, dass ein verschleißoptimierter Betrieb erfolgt. Ebenso ist es möglich, beispielsweise eine geforderte Arbeitsleistung als Jobparameter anzugeben, wozu dann die Maschinenparameter ermittelt werden, mit welchen sich diese Arbeitsleistung bei möglichst geringem Verschleiß der Bodenbearbeitungswerkzeuge erzielen lässt.

Bezüglich der Maschinenparameter wird der Verschleiß der Bodenbearbeitungswerkzeuge im Wesentlichen von der Frästiefe, der Vorschubgeschwindigkeit und der Fräswalzendrehzahl sowie den damit verbundenen und auf die Fräswalze übertragenen Maschinenparametern Motorleistung und Drehmoment beeinflusst. Daher kann es vorgesehen sein, dass der Maschinenparametersatz zumindest eine Frästiefe und/oder eine Vorschubgeschwindigkeit und/oder eine Fräswalzendrehzahl und/oder eine Motorleistung und/oder ein Drehmoment umfasst.

Die den Verschleiß der Bodenbearbeitungsmaschine hauptsächlich beeinflussenden Materialeigenschaften können dadurch berücksichtigt werden, dass als Materialeigenschaft eine Abrasivität und/oder eine Härte und/oder ein Materialtyp und/oder eine Materialzusammensetzung und/oder eine Temperatur und/oder ein Schichtaufbau bestimmt wird. Als mögliche Materialtypen können beispielsweise Angaben wie Asphalt oder Beton mit ihren bekannten Materialeigenschaften berücksichtigt werden.

Der Betrieb einer Bodenbearbeitungsmaschine unterliegt weiteren Anforderungen, um beispielsweise wirtschaftliche oder zeitliche Vorgaben einzuhalten. Die daraus resultierenden Maschinenparameter stehen häufig im Widerspruch zu denen, die zu einem geringstmöglichen Verschleiß führen. Um auch solche Vorgaben einzuhalten kann es vorgesehen sein, dass als Jobparameter eine geplante Veränderung an dem zu bearbeitenden Material, beispielsweise eine Frässtrecke, eine Fräsleistung, eine Fräsarbeit und/oder eine Arbeitszeit, verwendet wird. Als Fräsarbeit kann beispielsweise eine Masse oder Fräsvolumen des abzutragenden Materials vorgegeben werden. Dies kann dann zu einer erforderlichen Frässtrecke und Frästiefe führen. Als Fräsleistung kann eine Arbeit pro Zeit vorgegeben werden, beispielsweise eine zu bearbeitende Masse pro Zeit, ein zu bearbeitendes Materialvolumen pro Zeit oder eine zu bearbeitende Fläche bzw. Strecke pro Zeit.

Die Arbeitszeit kann beinhalten, bis wann eine vorgegebene Arbeit abgeschlossen sein muss. Sie kann weiterhin angeben, wann ein günstiger Zeitpunkt für einen Wechsel der Bodenbearbeitungswerkzeuge vorliegt, beispielsweise an einem Schichtende oder einer geplanten Stillstandzeit der Bodenbearbeitungsmaschine. Die Maschinenparameter können daraufhin so eingestellt werden, dass die Bodenbearbeitungswerkzeuge nicht vor diesem Zeitpunkt gewechselt werden müssen, wodurch zusätzliche Stillstandzeiten vermieden werden können. Durch Berücksichtigung der Jobparameter, der Materialeigenschaften und gegebenenfalls vorgegebener Maschinenparameter können die verbleibenden Maschinenparameter so eingestellt werden, dass ein wirtschaftlicher Betrieb der Bodenbearbeitungsmaschine bei geringstmöglichem Verschleiß der Bodenbearbeitungswerkzeuge bzw. geringstmöglichen Wartungskosten ermöglicht wird.

Entsprechend einer bevorzugten Ausgestaltungsvariante der Erfindung kann es vorgesehen sein, dass aus der zumindest einen Materialeigenschaft und/oder aus zumindest einem Maschinenparameter des Maschinenparametersatzes und/oder aus einer Änderung eines Verschleißzustandes wenigstens eines Bodenbearbeitungswerkzeugs, insbesondere eines Meißels und/oder eines Meißelhalters, zumindest ein Kennwert gebildet wird, der ein Verhältnis zwischen einem durch eine erbrachte Fräsarbeit der Bodenbearbeitungsmaschine verursachten Verschleiß des Bodenbearbeitungswerkzeugs und der erbrachten Fräsarbeit darstellt, und dass der zumindest eine Soll-Maschinenparameter derart bestimmt wird, dass der Kennwert einen möglichst kleinen Wert annimmt. Bei Betrieb einer Bodenbearbeitungsmaschine mit den Maschinenparametern eines Maschinenparametersatzes ergibt sich in Abhängigkeit der vorliegenden Materialeigenschaften je geleisteter Fräsarbeit ein bestimmter Verschleiß. Dieser Verschleiß kann aus den Materialeigenschaften und den vorliegenden Maschinenparametern bestimmt oder direkt, beispielsweise durch eine visuelle Kontrolle der Bodenbearbeitungswerkzeuge, ermittelt werden. Der Kennwert kann, beispielsweise in Abhängigkeit von Maschinenparametern bzw. Maschinenparametersätzen und Materialeigenschaften, in einer Datenbank abgelegt sein. Für vorliegende Materialeigenschaften können so die Maschinenparameter bzw. der Maschinenparametersatz ausgewählt werden, denen der kleinste Kennwert zugeordnet ist. Sind bestimmte Maschinenparameter eines Maschinenparametersatzes auf Grund von durch die Bedienperson eingestellten Vorgabe-Maschinenparametern oder Jobparametern vorgegeben und können daher nicht bezüglich des Verschleißes optimiert werden, kann aus den verbleibenden Einstellmöglichkeiten der Maschinenparametersatz mit dem kleinsten Kennwert ausgewählt und eingestellt werden.

Die Bestimmung der Änderung des Verschleißzustandes, beispielsweise durch eine visuelle Kontrolle, ergibt zusätzlich die Möglichkeit, weitere Kennwerte für die jeweils vorliegenden Materialdaten und Maschinenparameter, mit denen eine Fräsarbeit durchgeführt wurde, zu ermitteln und der Datenbank hinzuzufügen. Somit wird ein lernendes System geschaffen, dem beispielsweise für bisher nicht berücksichtigte Materialeigenschaften und Maschinenparametereinstellungen Kennwerte zur künftigen Optimierung der Maschinenparameter zugeführt werden können.

Alternativ zu dem genannten Kennwert kann auch dessen Kehrwert verwendet werden, wobei die Maschinenparameter dann auf einen möglichst großen Wert hin optimiert werden.

Vorteilhaft kann es vorgesehen sein, dass die erbrachte Fräsarbeit aus der Steuereinheit der Bodenbearbeitungsmaschine ausgegeben wird oder von der Bedienperson in die Verarbeitungseinrichtung eingegeben wird. Die erbrachte Fräsarbeit kann so beispielsweise bei der Bestimmung des Kennwertes berücksichtigt werden.

Die Bestimmung des Verschleißzustandes der Bodenbearbeitungswerkzeuge kann auf verschiedene Weisen erfolgen. Beispielsweise kann es vorgesehen sein, dass die Änderung des Verschleißzustandes durch eine berührungslose Messmethode ermittelt wird. Weiterhin ist es denkbar, dass der Verschleißzustand bei einem Wechsel des zumindest einen Bodenbearbeitungswerkzeugs bestimmt wird. Es ist auch möglich, aus den erforderlichen Wechselintervallen für das zumindest eine Bodenbearbeitungswerkzeug oder aus der Anzahl der je Wechselintervall auszuwechselnden Bodenbearbeitungswerkzeuge, insbesondere Meißel, einen Rückschluss auf den Verschleißzustand zu ziehen. Dabei ermöglicht insbesondere die berührungslose Messmethode eine schnelle Bestimmung des Verschleißzustandes ohne lange Ausfallzeiten der Bodenbearbeitungsmaschine. Die alternativen Varianten sind hingegen kostengünstig umzusetzen.

Entsprechen einer möglichen Ausführungsform der Erfindung kann es vorgesehen sein, dass der aktuelle Verschleißzustand wenigstens eines Bodenbearbeitungswerkzeuges, insbesondere eines Meißels und/oder eines Meißelhalters, erfasst wird, dass aus dem aktuellen Verschleißzustand eine Restverschleißkapazität bis zum Erreichen einer vorgegebenen Verschleißgrenze ermittelt wird und dass die Restverschleißkapazität bei der Ermittlung des zumindest einen Soll-Maschinenparameters berücksichtigt wird. Die Maschinenparameter können dadurch beispielsweise so ausgelegt werden, dass die Verschleißgrenze zu einem günstigen Zeitpunkt für einen Wechsel der Bodenbearbeitungswerkzeuge, beispielsweise zu einem Schichtende, einer ohnehin geplanten Stillstandzeit der Bodenbearbeitungsmaschine oder einem Abschluss einer durchzuführenden Arbeit, erreicht wird. Dazu kann es vorteilhaft sein, die Fräsleistung der Bodenbearbeitungsmaschine zu reduzieren, um nicht vorzeitig einen Wechsel der Bodenbearbeitungswerkzeuge durchführen zu müssen. Es kann jedoch auch sinnvoll sein, die Fräsleistung zu erhöhen und damit einen erhöhten Verschleiß in Kauf zu nehmen, wenn dadurch ein günstiger Zeitraum zum Wechseln der Bodenbearbeitungswerkzeuge bei gleichzeitig erhöhter Arbeitsleistung erreicht wird. Vorteilhaft kann zur Bestimmung der geeigneten Maschinenparameter der beschriebene Kennwert als Verhältnis zwischen dem Verschleiß und der erbrachten Fräsarbeit verwendet werden. Bei bekannter Restverschleißkapazität kann unter Berücksichtigung der Materialeigenschaften ein Kennwert ausgewählt werden, nach dem die Durchführung der vorgegebenen Fräsarbeit derart ermöglicht ist, dass nach Abschluss der Fräsarbeit die Verschleißgrenze der Bodenbearbeitungswerkzeuge erreicht ist. Zur Durchführung der Fräsarbeit können dann die dem Kennwert zugeordneten Maschinenparameter an der Bodenbearbeitungsmaschine eingestellt werden.

Eine einfache und aktuelle Bestimmung der Materialeigenschaften des zu bearbeitenden Untergrunds kann erfindungsgemäß dadurch erfolgen, dass die Materialeigenschaften während des Betriebes der Bodenbearbeitungsmaschine anhand von Maschinenparametern, insbesondere der Frästiefe und/oder der Vorschubgeschwindigkeit und/oder der Fräswalzendrehzahl und/oder des aktuell an einem Bodenbearbeitungswerkzeug anliegenden Drehmoments und/oder der vom Antriebsmotor aktuell abgegebenen Leistung ermittelt werden. Diese Maschinenparameter geben einen Rückschluss auf die Materialeigenschaften, insbesondere die Abrasivität oder die Härte des zu bearbeitenden Untergrundes. Die Drehzahl, das Drehmoment und die abgegebene Leistung können unmittelbar der elektronischen Motorsteuerung (ECU) des Antriebsmotors entnommen werden kann. Die ersten beiden Parameter können von der Maschinensteuerung bereitgestellt werden. Die Bestimmung der Materialeigenschaften kann dadurch verbessert werden, dass zusätzlich zu den Maschinenparametern auch der Verschleiß der Bodenbearbeitungswerkzeuge, wie er während der Fräsarbeit an dem zu bestimmenden Material mit den vorliegenden Maschinenparametern auftritt, mit berücksichtigt wird.

Eine einfache Erfassung der einen weiteren Materialeigenschaft kann dadurch erfolgen, dass die Betriebsperson aus einer Liste verschiedener Untergrundkategorien die für den aktuell zu bearbeitenden Untergrund geeignete Untergrundkategorie oder Untergrundkategorien auswählen kann und dass diesen Untergrundkategorien die Materialeigenschaften zugeordnet sind und/oder dass die Betriebsperson Materialeigenschaften direkt vorgeben kann. Hierdurch kann der Maschinenbediener einfach vor Ort unter Berücksichtigung seines Erfahrungsschatzes den Untergrund beurteilen und eine entsprechende Auswahl vornehmen. Entsprechend einer alternativen Ausgestaltung der Erfindung kann es vorgesehen sein, dass die zumindest eine Materialeigenschaft aus einer Änderung des Verschleißzustandes wenigstens eines Bodenbearbeitungswerkzeugs, insbesondere eines Meißels und/oder eines Meißelhalters, ermittelt wird. Dabei kann die Änderung des Verschleißzustandes mit Hilfe eines berührungslosen Messverfahrens oder durch eine manuelle Überwachung bestimmt werden.

Vorteilhaft kann es dazu vorgesehen sein, dass zur Bestimmung der Materialeigenschaft zumindest ein Jobparameter berücksichtigt wird. Aus dem Jobparameter, beispielsweise einer erbrachten Fräsarbeit, und der damit verbundenen Änderung des Verschleißzustandes können die Materialeigenschaften des Untergrundes einfach bestimmt werden.

Entsprechend einer weiteren Ausgestaltung der Erfindung kann es vorgesehen sein, dass die Materialeigenschaften mittels zumindest eines Sensors, insbesondere mittels Radar oder Ultraschall, bestimmt werden und/oder dass die Sensoren an der Bodenbearbeitungsmaschine angebracht sind. Dabei können verschiedene Sensoren verwendet sein, um unterschiedliche Eigenschaften des Untergrundes bestimmen zu können. Mittels Ultraschall und Radar ist es möglich, auch die Materialeigenschaften von tiefer liegendem Material zu bestimmen und bei der Wahl der Maschinenparameter zu berücksichtigten.

Der Verschleiß der Bodenbearbeitungswerkzeuge kann dadurch weiter reduziert werden, dass die Materialeigenschaften des abzutragenden Materials innerhalb eines Arbeitsgebietes örtlich zugeordnet bestimmt werden und dass der zumindest eine Soll-Maschinenparameter in Abhängigkeit von der Position innerhalb des Arbeitsgebietes und den dort vorliegenden Materialeigenschaften ermittelt wird. Die Maschinenparameter können so jeweils an die örtlich vorliegenden Materialeigenschaften angepasst werden, so dass die Bodenbearbeitungsmaschine auch bei wechselnden Untergründen verschleißoptimiert betrieben werden kann.

Die die Bodenbearbeitungsmaschine betreffende Aufgabe der Erfindung wird dadurch gelöst, dass in der Speichereinheit zumindest eine Materialeigenschaft einspeicherbar ist, dass in der Speichereinheit zumindest ein Kennfeld und/oder zumindest eine Funktion eingespeichert ist, wobei das Kennfeld und/oder die Funktion einen Zusammenhang zwischen einem Verschleiß der Bodenbearbeitungswerkzeuge und zumindest der einen Materialeigenschaft und zumindest einem Maschinenparameter beschreiben, und dass die Recheneinheit dazu ausgelegt ist, an Hand des Kennfeldes und/oder der Funktion und der Materialeigenschaft zumindest einen Soll-Maschinenparameter zu ermitteln, bei dem ein geringstmöglicher oder ein vorgegebener Verschleiß der Bodenbearbeitungswerkzeuge vorliegt. Eine derart ausgestaltete Bodenbearbeitungsmaschine ermöglicht die Ermittlung von Soll-Maschinenparametern, bei denen die Bodenbearbeitungswerkzeuge einem geringstmöglichen bzw. einem vorgegebenen Verschleiß unterliegen. Dazu werden ein oder mehrere Maschinenparameter in Abhängigkeit von den vorliegenden Materialeigenschaften des abzutragenden Materials mit Hilfe des Kennfeldes oder der Funktion derart bestimmt, dass das gewünschte Verschleißverhalten vorliegt.

Entsprechend einer bevorzugten Ausführungsform der Erfindung kann es vorgesehen sein, dass in der Speichereinheit zumindest ein Vorgabe-Maschinenparameter einspeicherbar ist, dass das zumindest eine Kennfeld und/oder die Funktion zusätzlich einen Zusammenhang des Verschleißes der Bodenbearbeitungswerkzeuge zu dem Vorgabe-Maschinenparameter beschreibt und dass die Recheneinheit den Vorgabe-Maschinenparameter bei der Ermittlung des Soll-Maschinenparameters berücksichtigt. Der Vorgabe-Maschinenparameter kann von einer Betriebsperson der Bodenbearbeitungsmaschine vorgegeben werden. Das Kennfeld bzw. die Funktion stellt dann einen Zusammenhang zwischen zumindest den Materialeigenschaften, dem oder den zu optimierenden Maschinenparametern, dem Vorgabe-Maschinenparameter und dem Verschleißverhalten dar. Damit können die zu optimierenden Maschinenparameter als variable Größen unter Beibehaltung des oder der Vorgabe-Maschinenparameter derart variiert werden, dass der geringstmögliche oder der vorgegebene Verschleiß der Bodenbearbeitungswerkzeuge erreicht wird.

Der Arbeitsprozess der Bodenbearbeitungsmaschine kann dadurch weiter verbessert werden, dass in der Speichereinheit ein Jobparameter einspeicherbar ist, dass das zumindest eine Kennfeld und/oder die Funktion zusätzlich einen Zusammenhang des Verschleißes der Bodenbearbeitungswerkzeuge zu dem Jobparameter beschreibt und dass die Recheneinheit den Jobparameter bei der Ermittlung des Soll-Maschinenparameters berücksichtigt. Erfindungsgemäß wird die zumindest eine Materialeigenschaft während des Betriebs der Bodenbearbeitungsmaschine in Abhängigkeit von Maschinenparametern ermittelt.

Dabei kann es vorteilhaft vorgesehen sein, dass als Jobparameter eine geplante Veränderung an dem zu bearbeitenden Material, beispielsweise eine Frässtrecke, ein Fräsvolumen, eine Fräsleistung, eine Fräsarbeit und/oder eine Arbeitszeit einspeicherbar ist. Durch den oder die Jobparameter können wirtschaftliche Vorgaben zum Betrieb der Bodenbearbeitungseinrichtung bei der Wahl der Soll-Maschinenparameter mit berücksichtigt werden. So kann durch die Vorgabe eines Jobparameters der Auswahlbereich für die möglichen Soll-Maschinenparameter eingegrenzt werden, so dass die Vorgaben aus dem Jobparameter erreicht werden. Die Soll-Maschinenparameter werden von der Verarbeitungseinrichtung bestimmt. Um diese an der Bodenbearbeitungseinrichtung einzustellen zu können kann es vorgesehen sein, dass die Verarbeitungseinrichtung mit der Steuereinheit verbunden ist und dass die Verarbeitungseinrichtung dazu ausgelegt ist, den Soll-Maschinenparameter an die Steuereinheit zu übertragen und/oder dass die Verarbeitungseinrichtung mit einer Anzeigeeinheit verbunden ist und dass die Verarbeitungseinrichtung dazu ausgelegt ist, den Soll-Maschinenparameter oder eine Verrechnung des Soll-Maschinenparameters mit der Anzeigeeinheit anzuzeigen. Die angezeigten Soll-Maschinenparameter können dann von einer Bedienperson in die Steuereinrichtung eingegeben werden. Die Steuereinrichtung stellt daraufhin die Maschinenparameter auf die Soll-Maschinenparameter ein.

Zur Eingabe der einen weiteren Materialeigenschaft, der Vorgabe-Maschinenparameter oder der Jobparameter durch die Bedienperson kann es vorgesehen sein, dass der Verarbeitungseinrichtung eine Eingabeeinrichtung mittelbar oder unmittelbar zugeordnet ist. Die Eingabe kann beispielsweise über die verbundene Steuereinheit erfolgen, so dass eine ohnehin vorhandene und der Steuereinheit zugeordnete Eingabeeinrichtung verwendet werden kann.

Um der Verarbeitungseinrichtung die zur Bestimmung der Soll-Maschinenparameter erforderlichen Daten zukommen zu lassen kann es vorgesehen sein, dass die Verarbeitungseinrichtung dazu ausgelegt ist, Ist-Maschinenparameter und/oder Vorgabe-Maschinenparameter und/oder Materialeigenschaften von der Steuereinheit zu empfangen. Somit können Daten, welche der Steuereinheit ohnehin vorliegen, beispielsweise die Ist-Maschinenparameter, sowie Daten, welche der Steuereinheit zugeführt werden, an die Verarbeitungseinrichtung weitergeleitet werden.

Wesentlich für die Optimierung der Maschinenparameter ist die Kenntnis der Materialeigenschaften des zu bearbeitenden Untergrundes. Diese Materialeigenschaften können ohne zusätzlichen Aufwand dadurch erfasst werden, dass die Verarbeitungseinrichtung und/oder die Steuereinheit dazu ausgelegt ist, Materialeigenschaften während des Betriebes der Bodenbearbeitungsmaschine anhand von Maschinenparametern, insbesondere der Frästiefe und/oder der Vorschubgeschwindigkeit und/oder der Fräswalzendrehzahl und/oder des aktuell an einem Bodenbearbeitungswerkzeug anliegenden Drehmoments und/oder der vom Antriebsmotor aktuell abgegebenen Leistung, zu ermitteln. Der Verarbeitungseinrichtung bzw. der Steuereinheit kann dazu beispielsweise die Frästiefe, der Maschinenvorschub, die Drehzahl der Fräswalze, das an den Bearbeitungswerkzeugen anliegende Drehmoment und/oder die vom Antriebsmotor aktuell abgegebene Leistung zugeführt werden. Aus diesen Maschinenparametern kann dann die Verarbeitungs- oder die Steuereinrichtung einen Rückschluss auf die Materialeigenschaften, insbesondere die Abrasivität oder die Härte des zu bearbeitenden Untergrundes, ziehen. Die Drehzahl, das Drehmoment und die abgegebene Leistung können unmittelbar der elektronischen Motorsteuerung (ECU) des Antriebsmotors entnommen werden kann. Die Frästiefe und der Maschinenvorschub liegen in der Steuereinheit der Bodenbearbeitungsmaschine vor oder können in diese eingegeben werden. Die Bestimmung der Materialeigenschaften kann dadurch verbessert werden, dass zusätzlich zu den Maschinenparametern auch der Verschleiß der Bodenbearbeitungswerkzeuge, wie er während der Fräsarbeit an dem zu bestimmenden Material mit den vorliegenden Maschinenparametern auftritt, mit berücksichtigt wird.

Die Verarbeitungseinrichtung kann der Bodenbearbeitungsmaschine oder einer separaten Systemeinheit zugeordnet sein. Eine separate Systemeinheit kann beispielsweise über eine drahtlose Verbindung mit einer oder mehreren Bodenbearbeitungsmaschinen verbunden sein und für diese die Soll-Maschinenparameter vorgeben.

Die Erfindung wird im Folgenden anhand eines in den Zeichnungen dargestellten Ausführungsbeispieles näher erläutert. Es zeigen:
- Fig. 1: in schematischer Darstellung und Seitenansicht eine Fräsmaschine;
- Fig. 2: eine Fräswalze der Fräsmaschine gemäß Fig. 1 mit einer beispielhaften Vermessungseinrichtung beruhend auf dem Prinzip der Triangulation,
- Fig. 3: in einer schematischen Darstellung eine Verarbeitungseinrichtung mit einer Speichereinheit und einer Recheneinheit,
- Fig. 4: ein Flussdiagramm zur Ermittlung der für einen verschleißoptimierten Betrieb einer Bodenbearbeitungsmaschine geeigneten Parameter und
- Fig. 5: eine Prinzipdarstellung einer Arbeitssituation mit zwei Fräsmaschinen.

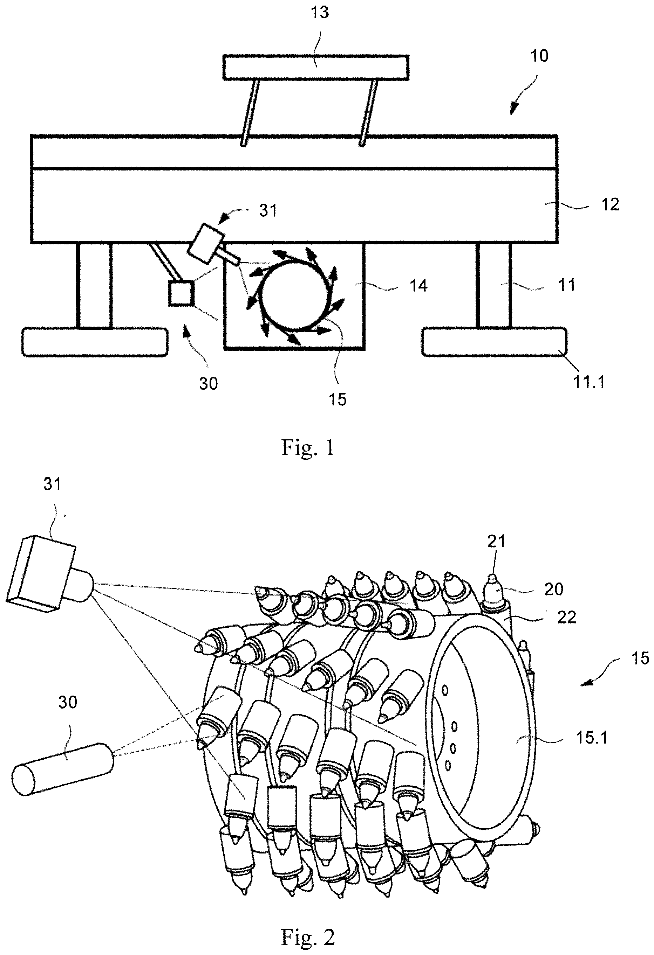

In der Fig. 1 ist eine Fräsmaschine 10, beispielsweise ein Surface Miner, eine Straßenfräsmaschine oder dergleichen, symbolisiert, bei der ein Maschinenrahmen 12 von vier über Hubsäulen 11 höhenverstellbar mit dem Maschinenrahmen 12 verbundenen Fahrwerken 11.1, beispielsweise Kettenlaufwerke getragen ist. Die Straßenfräsmaschine 10 kann, ausgehend von einem Leitstand 13, bedient werden. In einem Fräswalzenkasten 14 ist eine Fräswalze 15 angeordnet.

In der gezeigten Ausführungsform bietet die Fräsmaschine 10 die Möglichkeit, den Verschleißzustand von in Fig. 2 gezeigten Meißeln 20 und Meißelhaltern 22 berührungslos zu messen. Dazu sind eine Lichtquelle 30 und eine Kamera 31 der Fräswalze 15 zugeordnet.

Im Einsatz wird der Maschinenrahmen 12 mit einer vorgegebenen Vorschubgeschwindigkeit über den zu bearbeitenden Untergrund bewegt. Dabei tragen die auf der sich drehenden Fräswalze 15 angeordneten Meißel 20 den Untergrund ab. Die Höhenposition sowie die Drehzahl der Fräswalze 15 können eingestellt werden.

In der Fig. 2 ist die Fräswalze 15 deutlicher gezeigt. Auf der Oberfläche eines Fräsrohrs 15.1 der Fräswalze 15 sind eine Vielzahl von Meißelhaltern 22 befestigt. In jedem Meißelhalter 22 ist ein Meißel 20 gehalten. Der Meißel 20 weist eine Meißelspitze 21 aus einem Hartwerkstoff, insbesondere aus Hartmetall, auf. Im vorliegenden Beispiel sind die Meißelhalter 22 unmittelbar auf die Fräswalze 15 aufgeschweißt. Es ist jedoch auch der Einsatz von Wechselhaltersystemen denkbar. Dabei ist ein Basisteil auf die Fräswalze 15 aufgeschweißt, in dem dann der Meißelhalter 22 lösbar befestigt ist.

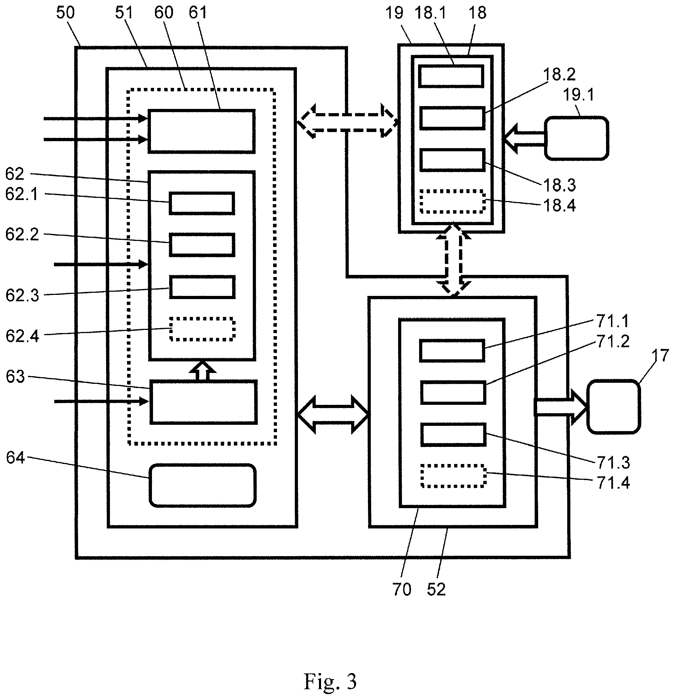

Die Verschleißgeschwindigkeit der Bodenbearbeitungswerkzeuge, im vorliegenden Ausführungsbeispiel der Meißel 20 und der Meißelhalter 22, wird im Wesentlichen durch zwei in Fig. 3 gezeigte Faktorgruppen bestimmt:
1. Maschinenparameter 18.1, 18.2, 18.3, 18.4 der Fräsmaschine 10, z.B.
   a. Frästiefe
   b. Vorschubgeschwindigkeit
   c. Fräswalzendrehzahl
   d. Motorleistung
   e. Drehmoment
2. Materialeigenschaften 61 des abzutragenden Untergrundes, z.B.
   a. Abrasivität
   b. Härte
   c. Materialtyp (z.B. Asphalt, Beton, usw.)
   d. Materialzusammensetzung
   e. Temperatur

Durch die Wahl der einstellbaren Maschinenparameter 18.1, 18.2, 18.3, 18.4 kann bei gegebenen Materialeigenschaften 61 das Verschleißverhalten der Bodenbearbeitungswerkzeuge beeinflusst werden. Darauf aufbauend wird erfindungsgemäß ein Expertensystem zur Unterstützung eines Maschinenbedieners bei der Auswahl geeigneter Maschinenparameter 18.1, 18.2, 18.3, 18.4 zur Optimierung des Verschleißes der Bodenbearbeitungswerkzeuge bereitgestellt.

Damit ein Verschleiß der Bodenbearbeitungswerkzeuge entsteht, muss die Bodenbearbeitungsmaschine eine gewisse Fräsarbeit erbracht haben. Diese Fräsarbeit kann gemessen werden, nämlich beispielsweise als gefräste Masse (Fräsmasse), als Fräsvolumen und/oder als gefräste Wegstrecke etc. Die Ermittlung der erbrachten Fräsarbeit kann insbesondere direkt an einer Bodenbearbeitungsmaschine vorgenommen werden.

Die Steuerung der Fräsmaschine erfolgt über die Steuereinheit 19. Über diese kann der Maschinenbediener die aktuellen Maschinenparameter 18.1, 18.2, 18.3, 18.4, beeinflussen oder direkt einstellen.

Zur Ermittlung geeigneter, ebenfalls in Fig. 3 gezeigter Soll-Maschinenparameter 71.1, 71.2, 71.3, 71.4 für einen verschleißoptimierten Betrieb der Bodenbearbeitungsmaschine müssen die Materialeigenschaften 61 bekannt sein. Diese können indirekt erfasst werden. Beispielsweise lassen sich in dem zu fräsenden Gebiet Proben (z.B. Probebohrungen) nehmen und auswerten. Handelt es sich bei dem zu bearbeitenden Untergrund beispielsweise um einen Verkehrsweg, kann ggf. auf Daten zurückgegriffen werden, die während des Einbauprozesses der Verkehrsfläche gespeichert wurden (z.B. Charakteristika des eingebauten Belages). Denkbar ist es auch, vorhandene Minen-Kategorisierungen zu verwenden. Für Minen werden allgemeine Härte-/Abrasivitätskategorien festgelegt (z.B. "hart, nicht abrasiv", "mittel, nicht abrasiv", "weich, abrasiv" etc. festgelegt). Aus diesen Kategorien kann die für die geplante Fahrstecke passende Kategorie ausgewählt werden. Hierbei können in einem Speicher der Bodenbearbeitungsmaschine Karten mit den entsprechenden Daten hinterlegt sein. Verfügt die Bodenbearbeitungsmaschine zusätzlich eine Einrichtung zur Bestimmung ihrer Position (z.B. GNSS oder GPS), können die aktuellen Materialeigenschaften 61 an Hand der hinterlegten Karten in Abhängigkeit dieser Position bestimmt werden.

Die Materialeigenschaften 61 werden durch Auswertung der Maschinenparameter 18.1, 18.2, 18.3, 18.4 ermittelt da die Materialeigenschaften 61 unmittelbar mit diesen Maschinendaten korrelieren. So wird beispielsweise ein hartes Material bei gleicher Frästiefe, Fräswalzendrehzahl und Vorschubgeschwindigkeit eine höhere Motorleistung und ein höheres Drehmoment erfordern als ein weiches Material.

Eine Möglichkeit zur Bestimmung von weiteren Materialeigenschaften 61 besteht darin, dass ein Maschinenführer die Materialkennwerte abschätzt. Die Materialkennwerte können dazu vorteilhaft in Kategorien eingeteilt werden. Beispielsweise können Kategorien wie "hart/nicht abrasiv" oder "weich/abrasiv" vorgesehen sein. Die Kategorien werden vorteilhaft dem Maschinenführer zur Auswahl, beispielsweise auf einem Display, angezeigt. Der Maschinenführer kann weitere, die Materialeigenschaften 61 eingrenzende Bodenparameter angeben. So kann der Materialtyp, beispielsweise Beton oder Asphalt etc., von dem Maschinenführer angegeben werden. Diesen Materialtypen sind dann die zugehörigen Materialeigenschaften 61 zugeordnet. Die Materialeigenschaften 61 können durch die Angabe weiterer Parameter, beispielsweise einer Bodentemperatur oder einer Umgebungstemperatur näher bestimmt werden. Auch die Angabe über einen Schichtaufbau, beispielsweise einer 2cm dicken Deckschicht über einer 8cm dicken Binderschicht, sowie ggf. die Zusammensetzung dieser Schichten kann durch den Maschinenführer erfolgen.

Die Materialeigenschaften 61 können auch aus dem bisherigen Verschleiß der Bodenbearbeitungswerkzeuge ermittelt werden. Dazu kann das Verschleißverhalten mit Hilfe eines Verschleißscanners, wie er in den Fig.en 1 und 2 in Form des berührungslosen Messsystems, bestehend aus der Kamera 31 und der Lichtquelle 30, dargestellt ist, bestimmt werden. Der Verschleißscanner ermittelt vorzugsweise das Profil zumindest eines Meißels 20. Aus dem Vergleich des Profils zwischen zwei Messungen kann das Verschleißverhalten bestimmt und daraus die Materialeigenschaften 61 ermittelt werden. Dazu kann beispielsweise eine Längenänderung oder eine Volumenänderung des Meißels 20 gegenüber einer Anfangslänge bzw. einem Anfangsvolumen oder zwischen zwei Verschleißzuständen ermittelt werden. Vorzugsweise wird bei der Bestimmung der Materialeigenschaften 61 aus dem bisherigen Verschleiß die Arbeit, welche von der Bodenbearbeitungsmaschine verrichtet wurde und zu dem Verschleiß geführt hat, berücksichtigt.

Eine weitere Möglichkeit zur Bestimmung des bisherigen Verschleißverhaltens und daraus der Materialeigenschaften 61 besteht in einer manuellen Überwachung der Bodenbearbeitungswerkzeuge, beispielsweise durch den Maschinenführer. Das Verschleißverhalten kann dabei an Hand der Wechselintervalle der Meißel 20 oder durch Aufnahme des Verschleißzustandes der Meißel 20, beispielsweise beim Meißelwechsel, erfolgen. Weiterhin kann die Anzahl der bei einer Wartung auszuwechselnden Meißel 20 ausgewertet werden. Die Anzahl kann dabei durch Zählen durch den jeweiligen Techniker bestimmt werden. Weiterhin können die Meißel 20 mit einem RFID-Chip ausgerüstet sein, so dass die Anzahl der gewechselten Meißel 20 automatisch bestimmt werden kann. Eine weiter Möglichkeit der automatisierten Bestimmung der Anzahl ausgewechselter Meißel 20 besteht darin, einen Sensor in einem Werkzeug (Meißelausdrücker, Hammer) zum Austreiben der Meißel 20 aus dem Meißelhalter 22 anzuordnen oder akustische Signale, welche beim Meißelwechsel auftreten, auszuwerten.

Vorteilhaft werden die Materialeigenschaften 61 unabhängig von der Art ihrer Bestimmung zusammenfassend beschrieben und weiterverarbeitet, beispielsweise in Form der oben genannten Kategorien oder von geeigneten Kennzahlen.

Jobparameter 63 charakterisieren eine geforderte Arbeitsleistung der Bodenbearbeitungsmaschine. Dies kann beispielsweise in Form einer pro Zeiteinheit zu fräsenden Fläche oder Strecke oder ein pro Zeiteinheit abzutragendes Volumen sein. Als Jobparameter 63 können auch eine zu verrichtende Fräsarbeit bzw. eine verfügbare Arbeitszeit vorgegeben werden. Weiterhin können Jobparameter 63 indirekt über die Vorgabe der damit verbundenen Maschinenparameter 18.1, 18.2, 18.3, 18.4, beispielsweis der Vorschubgeschwindigkeit und der Frästiefe, mit einbezogen werden. Jobparameter 63 beschreiben letztendlich eine geplante Veränderung an dem zu bearbeitenden Material. Die Anforderungen an die Maschinenparameter 18.1, 18.2, 18.3, 18.4, welche sich durch einen vorgegebenen Jobparameter 63 ergeben, stehen häufig im Widerspruch zu den Anforderungen, welche sich aus einem gewünschten geringen Verschleiß ergeben. Bei der Optimierung der Maschinenparameter 18.1, 18.2, 18.3, 18.4 werden die Soll-Maschinenparameter 71.1, 71.2, 71,3, 71.4 daher vorzugsweise so gewählt, dass die Jobparameter 63 eingehalten werden und der dazu geringstmögliche Verschleiß der Bodenbearbeitungswerkzeuge vorliegt.

Sind die Maschinenparameter 18.1, 18.2, 18.3, 18.4 und die Materialeigenschaften 61 bekannt, kann die Verschleißgeschwindigkeit der Bodenbearbeitungswerkzeuge abgeschätzt werden. So wird beispielsweise ein abrasives Material einen schnelleren Verschleiß bewirken als ein nicht abrasives Material. Weiterhin wird eine große Frästiefe einen höheren Verschleiß hervorrufen als eine geringe Frästiefe. Erfindungsgemäß ist es daher vorgesehen, zumindest einen Maschinenparameter 18.1, 18.2, 18.3, 18.4 so zu optimieren, dass eine möglichst kleine Verschleißgeschwindigkeit der Bodenbearbeitungswerkzeuge vorliegt. Dabei wird vorzugsweise berücksichtigt, dass die Bodenbearbeitungsmaschine gleichzeitig eine möglichst hohe Arbeitsleistung erbringt.
Fig. 3 zeigt in einer schematischen Darstellung eine Verarbeitungseinrichtung 50 mit einer Speichereinheit 51 und einer Recheneinheit 52. Die Speichereinheit 51 und die Recheneinheit 52 sind, symbolisiert durch einen Pfeil, mittels Datenleitungen bidirektional verbunden. Beide stehen optional, symbolisiert durch gestrichelte Pfeile, mit der Steuereinheit 19 der Bodenbearbeitungsmaschine in bidirektionaler Verbindung. An die Verarbeitungseinrichtung 50 ist eine Anzeigeeinheit 17 angeschlossen. Der Steuereinheit 19 ist eine Eingabeeinheit 19.1 zugeordnet.

In der Speichereinheit 51 können die Materialeigenschaften 61, ein Vorgabe-Maschinenparametersatz 62, Jobparameter 63 sowie Kennfelder 64, beispielsweise in Form von Datenbanken, abgelegt werden. Dem Vorgabe-Maschinenparametersatz 62 sind im vorliegenden Ausführungsbeispiel drei Vorgabe-Maschinenparameter 62.1, 62.2, 62.3 sowie optional weitere Vorgabe-Maschinenparameter 62.4 zugeordnet. Die Materialeigenschaften 61, der Vorgabe-Maschinenparametersatz 62 und die Jobparameter 63 bilden zusammen einen Vorgabedatensatz 60, wie dies durch die gestrichelte Umrandung symbolisiert ist.

Das oder die in der Speichereinheit 51 hinterlegten Kennfelder 64 beschreiben den Zusammenhang zwischen dem Verschleiß der Bodenbearbeitungswerkzeuge und zumindest einer Materialeigenschaft 61 und zumindest einem Maschinenparameter 18.1, 18.2, 18.3, 18.4. Vorzugsweise liegen Kennfelder 64 vor, die mehrere Materialeigenschaften 61 und Maschinenparameter 18.1, 18.2, 18.3, 18.4 berücksichtigen. Dabei kann in den Kennfeldern 64 auch berücksichtigt sein, dass Maschinenparameter 18.1, 18.2, 18.3,18.4 sich gegenseitig beeinflussen können. An Stelle der Kennfelder 64 können auch funktionale Zusammenhänge in der Speichereinheit 51 hinterlegt sein, an Hand welcher unter Berücksichtigung zumindest einer Materialeigenschaft 61 und eines Maschinenparameters 18.1, 18.2, 18.3, 18.4 auf den Verschleiß der Bodenbearbeitungswerkzeuge geschlossen werden kann.

Die Recheneinheit 52 ist vorzugsweise als Mikroprozessor ausgeführt. Sie ermittelt aus den in der Speichereinheit 51 hinterlegtem Vorgabedatensatz 60 und Kennfeldern 64 einen Soll-Maschinenparametersatz 70. Der Soll-Maschinenparametersatz 70 enthält im gezeigten Ausführungsbeispiel drei Soll-Maschinenparameter 71.1, 71.2, 71.3. Es können jedoch auch weitere Soll-Maschinenparameter 71.4 vorgesehen sein.

Der oder die so ermittelten Soll-Maschinenparameter 71.1, 71.2, 71.3, 71.4 können direkt an die Steuereinheit 19 übermittelt werden. Alternativ ist es möglich, dass die Soll-Maschinenparameter 71.1, 71.2, 71.3, 71.4 auf einer Anzeigeeinheit 17 der Bedienperson angezeigt werden. Dies kann als direkte Anzeige der ermittelten Soll-Maschinenparameter 71.1, 71.2, 71.3, 71.4 erfolgen. Es ist jedoch auch möglich, der Bedienperson lediglich notwendige Änderungen an den derzeit eingestellten Maschinenparametern 18.1, 18.2, 18.3, 18.4 anzuzeigen, um den Verschleiß zu optimieren.

Zusätzlich kann auf der Anzeigeeinheit 17 auch der zu erwartende Effekt bei der Übernahme des vorgeschlagenen Soll-Maschinenparameters 71.1, 71.2, 71.3, 71.4, wie zum Beispiel die zu erwartende Verschleißreduzierung, angezeigt werden.

Werden die Soll-Maschinenparameter 71.1, 71.2, 71.3, 71.4 direkt an die Steuereinheit 19 übermittelt kann es vorzugsweise vorgesehen sein, dass vor der Einstellung der Soll-Maschinenparameter 71.1, 71.2, 71.3, 71.4 eine Bestätigung durch die Bedienperson erfolgen muss, um unerwünschte Eingriffe in die Maschinensteuerung zu verhindern.

Im einfachsten Fall kann es sein, dass lediglich eine Materialeigenschaft 61 des zu bearbeitenden Untergrunds vorgegeben ist. Der Vorgabedatensatz 60 umfasst somit lediglich diese wenigstens eine Materialeigenschaft 61. In diesem Fall wird auch lediglich diese eine Materialeigenschaft 61 bei der Ermittlung der Soll-Maschinenparameter 71.1, 71.2, 71.3, 71.4 berücksichtigt. Bei dem Vergleich des Vorgabedatensatzes 60 mit den hinterlegten Kennfeldern 64 werden somit sämtliche Soll-Maschinenparameter 71.1, 71.2, 71.3, 71.4 so ermittelt, dass ein verschleißoptimierter Betrieb der Bodenbearbeitungsmaschine möglich ist.

Die Materialeigenschaften 61 können, wie zuvor beschrieben, bestimmt und durch eine Bedienperson in die Verarbeitungseinrichtung 50 mittelbar oder unmittelbar eingegeben werden. Alternativ kann können die Materialeigenschaften 61, wie beschrieben, ermittelt und an die Speichereinheit 51 übertragen werden. Dies ist durch Pfeile, welche dem Block Materialeigenschaften 61 zugeführt ist, symbolisiert.

Weiterhin ist es möglich, dass zusätzlich zu der einen oder mehreren Materialeigenschaften 61 durch den Maschinenbediener zumindest eine Vorgabe-Maschinenparameter 62.1, 62.2, 62.3, 62.4, z.B. eine Frästiefe oder eine Vorschubgeschwindigkeit, vorgegeben wird.

Die Vorgabe-Maschinenparameter 62.1, 62.2, 62.3, 62.4 stellen somit die Maschinenparameter dar, die fest vorgegeben sind und nicht optimiert werden. Der Vorgabedatensatz 60 umfasst somit die Materialeigenschaften 61 sowie den oder die Vorgabe-Maschinenparameter 62.1, 62.2, 62.3, 62.4.

Der Vorgabe-Maschinenparameter 62.1, 62.2, 62.3, 62.4 wird dann als Soll-Maschinenparameter 71.1, 71.2, 71.3, 71.4 übernommen. Zusätzlich wird der zumindest eine Vorgabe-Maschinenparameter 62.1, 62.2, 62.3, 62.4 als Teil des Vorgabedatensatzes 60 zusammen mit der wenigstens einen Materialeigenschaft 61 bei der Bestimmung der verbleibenden Soll-Maschinenparameter 71.1, 71.2, 71.3, 71.4 berücksichtigt. Bei dem Vergleich des Vorgabedatensatzes 60 mit den in der Speichereinheit 51 hinterlegten Kennfeldern 64 werden somit die nicht durch den Maschinenbediener vorgegeben Maschinenparameter derart als Soll-Maschinenparameter 71.1, 71.2, 71.3, 71.4 ermittelt, dass unter Berücksichtigung der wenigstens einen Materialeigenschaft 61 sowie des oder der Vorgabe-Maschinenparameter 62.1, 62.2, 62.3, 62.4 ein verschleißoptimierter Betrieb der Bodenbearbeitungsmaschine möglich ist.

Die Vorgabe-Maschinenparameter 62.1, 62.2, 62.3, 62.4 des Vorgabe-Maschinenparametersatzes 62 können von einer Bedienperson eingegeben werden, wiederum symbolisiert durch einen dem Vorgabe-Maschinenparametersatzes 62 zugeführten Pfeil. Alternativ dazu können die Vorgabe-Maschinenparameter 62.1, 62.2, 62.3, 62.4 oder ein Teil der Vorgabe-Maschinenparameter 62.1, 62.2, 62.3, 62.4 von der Steuereinheit 19 übermittelt oder aus den Jobparametern 63 abgeleitet und in der Speichereinheit 51 abgelegt werden. Die Jobparameter 63 können ebenfalls von einer Bedienperson vorgegeben werden.

Eine Maschineneinstellung, beispielsweise eine Vorschubgeschwindigkeit, kann somit beispielsweise als aktueller erster Maschinenparameter 18.1 in der Steuereinheit 19 eingegeben und als Vorgabe-Maschinenparameter 62.1 in die Speichereinheit 51 übernommen werden. Weiterhin können weitere aktuelle Maschinenparameter 18.1, 18.2, 18.3, 18.4, wie die Frästiefe oder die Drehzahl der Fräswalze 15, als Vorgabe-Maschinenparameter 62.1, 62.2, 62.3, 62.4 von der Steuereinheit 19, in die Speichereinheit 51 übernommen werden.

Die dargestellte Verarbeitungseinrichtung 50 ermöglicht es weiterhin, während des laufenden Betriebes der Bodenbearbeitungsmaschine den Verschleiß der Bodenbearbeitungswerkzeuge zu optimieren. Hierbei werden die aktuell an der Steuereinheit 19 eingestellten Maschinenparameter 18.1, 18.2, 18.3, 18.4 in die Speichereinheit 51 als Vorgabe-Maschinenparameter 62.1, 62.2, 62.3, 62.4 übernommen und bei der Erstellung des Vorgabedatensatzes 60 berücksichtigt. Die Recheneinheit 51 kann somit einen optimierten Soll-Maschinenparametersatz 70 ermitteln, bei dem wenigstens ein Maschinenparameter von den aktuell eingestellten Maschinenparametern 18.1, 18.2, 18.3, 18.4 abweicht, um den Betrieb der Maschine zu optimieren. Der abweichende Parameter kann dem Maschinenbediener, wie oben dargestellt angezeigt, oder direkt an die Steuerungseinheit 19 übertragen werden.

Werden zusätzlich, oder alternativ zu dem Vorgabe-Maschinenparametersatz 62 Jobparameter 63 vorgegeben, so werden auch diese als Teil des Vorgabedatensatzes 60 bei der Bestimmung der Soll-Maschinenparameter 71.1, 71.2, 71.3, 71.4 berücksichtigt.

Der Speichereinheit 51 ist somit zur Durchführung des erfindungsgemäßen Verfahrens zumindest eine Materialeigenschaft 61 zugeführt. Optional und vorteilhaft können weitere Materialeigenschaften 61 sowie Vorgabe-Maschinenparameter 62.1, 62.2, 62.3, 62.4 und/oder Jobparameter 63 in der Speichereinheit 51 hinterlegt sein. Die Recheneinheit 52 liest den so gebildeten Vorgabedatensatz 60 aus der Speichereinheit 51 aus und ermittelt daraus mit Hilfe der Kennfelder 64 bzw. der funktionalen Zusammenhänge den Soll-Maschinenparametersatz 70 für den verschleißoptimierten Betrieb der Bodenbearbeitungsmaschine.

Die in Fig. 3 dargestellte Regelung ist insbesondere von Vorteil, wenn im Arbeitsgebiet der Bodenbearbeitungsmaschine verschiedene Materialeigenschaften 61 des zu bearbeitenden Untergrunds vorliegen (z. B. HardSpot) und / oder die Materialeigenschaften 61 während des Betriebs durch die Bodenbearbeitungsmaschine ermittelt werden. So ist es möglich, dass an der Maschine bereits zu Beginn des Arbeitseinsatzes Maschinenparameter 18.1, 18.2, 18.3, 18.4 eingestellt wurden, die unter den gegebenen Voraussetzungen (Materialeigenschaften 61 des Bodenuntergrunds zu Beginn der Bearbeitung) einen verschleißoptimierten Betrieb ermöglichen. Wenn sich während der Bearbeitung die Materialeigenschaften 61 ändern und dies von der Bodenbearbeitungsmaschine festgestellt wird, beispielsweise durch Ermittlung der Materialeigenschaften 61 über die Maschinenparameter 18.1, 18.2, 18.3, 18.4, den während der Fräsarbeit auftretenden Verschleiß, oder durch hinterlegte Karten mit Materialeigenschaften 61 und einer Positionsbestimmung mittels GPS, ergibt sich eine Änderung im Vorgabedatensatz 60. Bei dem Abgleich des geänderten Vorgabedatensatzes 60 mit den in der Speichereinheit 51 hinterlegten Kennfeldern werden dann optimierte Soll-Maschinenparameter 71.1, 71.2, 71.3, 71.4 für die geänderten Rahmenbedingungen ermittelt.

Darüber hinaus ist die in Fig. 3 gezeigte Regelung auch anwendbar, wenn zu Beginn des Arbeitseinsatzes keine Informationen über die Materialeigenschaften 61 des zu bearbeitenden Untergrunds vorliegen. Der Maschinenbediener stellt zu Beginn des Arbeitsprozesses die Maschinenparameter 18.1, 18.2, 18.3, 18.4 nach seinen Erfahrungen ein und beginnt die Fräsarbeit. Während des Fräsprozesses werden nun die eingestellten Maschinenparameter 18.1, 18.2, 18.3, 18.4 und zusätzliche Parameter der Bodenbearbeitungsmaschine überwacht. Beispielsweise kann bei durch den Maschinenbediener eingestellter Frästiefe und Vorschubgeschwindigkeit die Motorsteuerung überwacht werden. So kann beispielsweise überwacht werden, welches Drehmoment und/oder welche Drehzahl erforderlich sind, um die vorliegende Frästiefe und Vorschubgeschwindigkeit zu erreichen. Darüber hinaus kann der bei einer bestimmten Fräsarbeit an den Fräswerkzeugen auftretende Verschleiß betrachtet werden. Hieraus lassen sich Rückschlüsse auf die Materialeigenschaften 61 ziehen. Nachdem auf diesem Wege die Materialeigenschaften 61 ermittelt wurden, kann der Vorgabedatensatz 60 erstellt und unter Berücksichtigung der Kennfelder 64 die Soll-Maschinenparameter 71.1, 71.2, 71.3, 71.4 ermittelt werden. Diese können dann dem Maschinenbediener als Empfehlung für einen verschleißoptimierten Betrieb der Bodenbearbeitungsmaschine angezeigt oder über die Steuereinheit 19 eingestellt werden.

Neben der Optimierung der Maschinenparameter 18.1, 18.2, 18.3, 18.4 auf einen geringstmöglichen Verschleiß der Bodenbearbeitungswerkzeuge, gegebenenfalls unter Berücksichtigung von Vorgabe-Maschinenparameter 62.1, 62.2, 62.3, 62.4 und Jobparametern 63, kann es sinnvoll sein, einen höheren Verschleiß zuzulassen oder einen geringeren Verschleiß unter Anpassung der Jobparameter 63 oder der Vorgabe-Maschinenparameter 62.1, 62.2, 62.3, 62.4 zu erwirken, wenn dadurch beispielsweise günstigere Wechselzeitpunkte für die Bodenbearbeitungswerkzeuge erreicht werden. Solche günstigen Wechselzeitpunkte können ohnehin geplante Stillstandzeiten der Bodenbearbeitungsmaschine, ein Schichtende oder ein Abschluss einer durchzuführenden Fräsarbeit sein. Die Verschleißgeschwindigkeit kann dann durch geeignete Wahl der Soll-Maschinenparameter 71.1, 71.2, 71.3, 71.4 so beeinflusst werden, dass die Bodenbearbeitungswerkzeuge zu dem günstigen Wechselzeitpunkt ihre Verschleißgrenze erreicht haben. Dadurch kann beispielsweise vermieden werden, dass kurz vor Abschluss einer Fräsarbeit, beispielsweise dem Rückbau einer Straße, die Bodenbearbeitungswerkzeuge getauscht werden müssen. Weiterhin kann eine Arbeit mit einer höheren Fräsleistung und damit schneller abgeschlossen werden, wenn am Ende der Arbeit die Bodenbearbeitungswerkzeuge auch bei Betrieb mit geringstmöglichem Verschleiß einen Verschleißzustand erreichen, der einen Wechsel der Bodenbearbeitungswerkzeuge vor Beginn einer neuen Fräsarbeit sinnvoll erscheinen lassen.

Um die Soll-Maschinenparameter 71.1, 71.2, 71.3, 71.4 so zu optimieren, dass die Bodenbearbeitungswerkzeuge zu einem günstigen Wechselzeitpunkt ihre Verschleißgrenze erreicht haben, muss der aktuelle Verschleißzustand bzw. die Restverschleißkapazität der Bodenbearbeitungswerkzeuge bekannt sein. Dies kann beispielsweise durch das in den Figuren 1 und 2 gezeigte berührungslose Messverfahren erfolgen. Alternativ kann der Verschleißzustand auch durch eine visuelle Kontrolle erfasst werden oder er kann unter Kenntnis der bisherigen Betriebsbedingungen der Bodenbearbeitungsmaschine, insbesondere der verwendeten Maschinenparameter 18.1, 18.2, 18.3, 18.4, und den Materialeigenschaften 61 des abgetragenen Untergrunds, berechnet werden.

Aus der Veränderung des Verschleißzustandes der Bodenbearbeitungswerkzeuge und der dabei verrichteten Arbeit kann weiterhin ein Kennwert bestimmt werden, welcher das Verschleißverhalten beschreibt. Der Kennwert stellt eine Verhältniszahl zwischen dem Verschleiß und der verrichteten Arbeit dar. Er kann beispielsweise als eine Längen- oder Volumenänderung eines Meißels 20 bezogen auf ein verarbeitetes Fräsvolumen oder eine Fräsmasse gebildet sein. Solche Kennwerte können dann verschiedenen Materialeigenschaften 61 und Einstellungen von Maschinenparametersätzen zugeordnet werden. Zum Betrieb der Bodenbearbeitungsmaschine kann dann der Maschinenparametersatz ausgewählt werden, welcher für die Materialeigenschaften den kleinsten oder den geeigneten Kennwert aufweist und welcher die Vorgabe-Maschinenparameter 62.1 62.2, 62.3, 62.4 erfüllt. Der geeignete Kennwert und damit die geeigneten Maschinenparameter 18.1, 18.2, 18.3, 18.4 ergeben sich dabei beispielsweise aus der verbleibenden Restverschleißkapazität der Bodenbearbeitungswerkzeuge und der durchzuführenden Arbeit bis zum Erreichen eines geeigneten Wechselzeitpunktes für die Werkzeuge. Die Kennfelder 64 können sich aus mehreren Kennwerten für verschiedene Rahmenbedingungen, wie zum Beispiel unterschiedlichen Materialeigenschaften zusammensetzen.

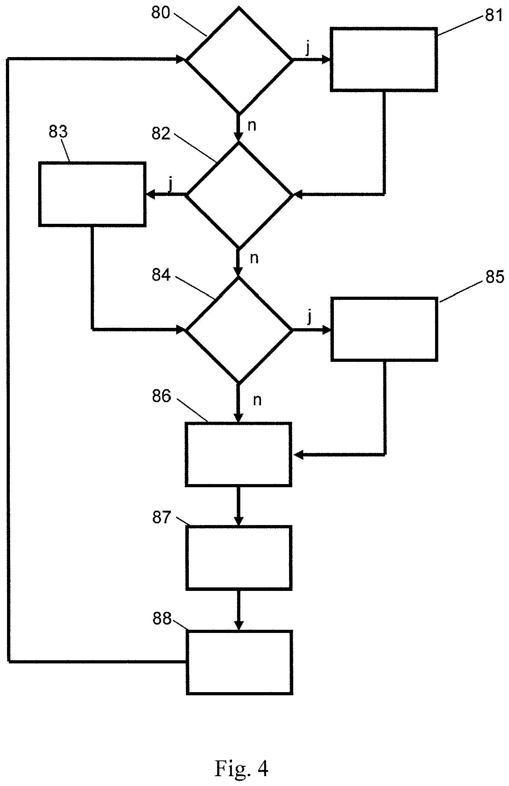

Fig. 4 zeigt ein Flussdiagramm zur Ermittlung der für einen verschleißoptimierten Betrieb der Bodenbearbeitungsmaschine geeigneten Parameter.

In einer ersten Abfrage 80 wird festgestellt, ob die Materialeigenschaften 61 des abzutragenden Untergrundes unbekannt sind, bzw. ob sich im Vergleich zu der vorherigen Ermittlung der optimalen Betriebsparameter Änderungen in den Materialeigenschaften 61 ergeben haben bzw. ergeben haben können. Falls eine Erfassung der Materialeigenschaften 61 notwendig ist erfolgt dies im ersten Block 81. Hierbei können die Materialeigenschaften 61 beispielsweise vom Bediener eingegeben, aus einer hinterlegten Karte bestimmt oder durch die Bodenbearbeitungsmaschine ermittelt werden.

Wenn die aktuellen Materialeigenschaften 61 bekannt sind wird an der zweiten Abfrage 82 festgestellt, ob Vorgabe-Maschinenparameter 62.1 62.2, 62.3, 62.4 zu berücksichtigen sind. Ist dies der Fall, können die Vorgabe-Maschinenparameter 62.1 62.2, 62.3, 62.4 im zweiten Block 83, beispielsweise durch den Maschinenbediener eingegeben oder aus den in der Steuereinheit 19 der Bodenbearbeitungsmaschine aktuell eingestellten Maschinenparametern 18.1, 18.2, 18.3, 18.4 ermittelt werden.

In der nachfolgenden dritten Abfrage 84 wird ermittelt, ob zusätzliche Jobparameter 63 für den geplanten Arbeitseinsatz der Bodenbearbeitungsmaschine zu berücksichtigen sind. Diese können dann im dritten Block 85 durch den Bediener eingegeben werden.

Aus den so ermittelten Daten wird im vierten Block 86 der Vorgabedatensatz 60 erstellt. Dieser berücksichtigt die wenigstens eine Materialeigenschaft 61 sowie gegebenenfalls die vorliegenden Vorgabe-Maschinenparameter 62.1 62.2, 62.3, 62.4 und/oder die Jobparameter 63.

Im fünften Block 87 wird der Vorgabedatensatz 60 mit den in der Speichereinheit 51 hinterlegten Kennfeldern 64 verglichen und daraus die verschleißoptimierten Soll-Maschinenparameter 71.1, 71.2, 71.3, 71.4 ermittelt.

Im sechsten Block 88 erfolgt die Ausgabe der Soll-Maschinenparameter 71.1, 71.2, 71.3, 71.4. Diese können dem Bediener an der Anzeigeeinheit 17 entweder direkt angezeigt werden oder es können dem Bediener Empfehlungen zur Änderung von Maschinenparametern angezeigt werden, beispielsweise eine Verringerung des Vorschubes oder eine Erhöhung der Drehzahl der Fräswalze 15. Alternativ können die Soll-Maschinenparameter 71.1, 71.2, 71.3, 71.4 auch an die Steuereinheit 19 übertragen und, vorzugsweise nach einer Bestätigung durch den Bediener, direkt eingestellt werden.

Nach dem sechsten Block 88 können die vorhergehenden Schritte, beginnend mit der ersten Abfrage 80, erneut durchlaufen werden. Dies ist insbesondere sinnvoll, wenn sich die Materialeigenschaften 61 während der Bearbeitung des Untergrundes ändern können. Zusätzlich können durch den Bediener manuell vorgenommene Änderungen an Maschinenparametern 18.1, 18.2, 18.3, 18.4 als neue Vorgabe-Maschinenparameter 62.1 62.2, 62.3, 62.4 in den Vorgabedatensatz 60 übernommen und bei der Ermittlung der verschleißoptimierten Soll-Maschinenparameter 71.1, 71.2, 71.3, 71.4 berücksichtigt werden.

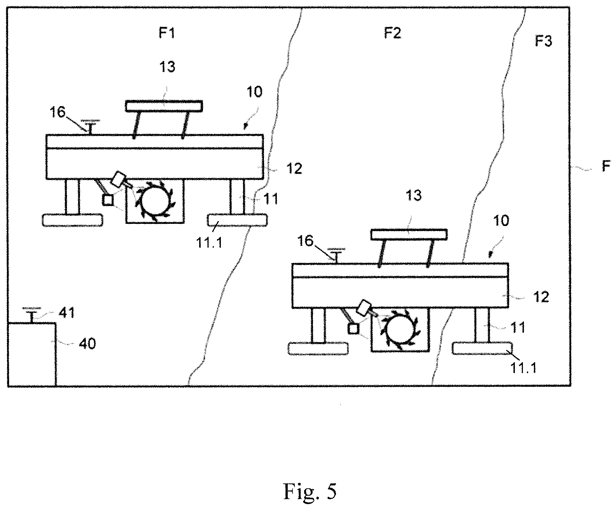

Fig. 5 veranschaulicht ein Fräsgebiet F, beispielsweise eine Mine, in dem mehrere Fräsmaschinen 10 arbeiten. Das Fräsgebiet F beinhaltet ein Rohstoffvorkommen, wobei sich die Materialeigenschaften 61 in Teilgebieten F1, F2, F3 ändern. Eine externe Systemeinheit 40 ist symbolisch am Rand des Fräsgebietes F dargestellt.

Sie steht über eine Sende- und Empfangsvorrichtung 41 drahtlos in Verbindung mit den Fräsmaschinen 10. Der Systemeinheit 40 ist die in Fig. 3 gezeigte Verarbeitungseinrichtung 50 mit der Recheneinheit 52 und der Speichereinheit 51 zugeordnet.

Den Teilgebieten F1, F2, F3 sind in Minenkarten Härte- und Abrasionskategorien als Materialparameter zugeordnet. Diese Minenkarten sind in der Speichereinheit 51 der Verarbeitungseinrichtung 50 hinterlegt. Auf Grundlage der Härte- und Abrasionskategorien ermittelt die Verarbeitungseinrichtung 50 für die Teilgebiete F1, F2, F3 die geeigneten Soll-Maschinenparameter 71.1, 71.2, 71.3, 71.4 und sendet diese an die Fräsmaschinen 10. Dabei berücksichtigt sie gegebenenfalls vorgegebene Jobparameter 63 und Vorgabe-Maschinenparameter 62.1 62.2, 62.3, 62.4. Diese können beispielsweise von den Fräsmaschinen 10 mittels daran vorgesehener zweiter Sende- und Empfangsvorrichtungen 16 an die Systemeinheit 40 gesendet werden oder direkt oder von einer weiteren Eingabeeinrichtung an die Systemeinheit 40 übertragen werden.

Die Fräsmaschinen 10 können so in den verschiedenen Teilgebieten F1, F2, F3 mit unterschiedlichen aktuellen Maschinenparametern 18.1, 18.2, 18.3, 18.4 betrieben werden, so dass jeweils das günstigste oder das gewünschte Verschleißverhalten der Bodenbearbeitungswerkzeuge vorliegt.

In einer weiteren Ausführungsvariante der Erfindung können die Materialeigenschaften 61 der verschiedenen Teilgebiete F1, F2, F3 beispielsweise von einer vorausfahrenden Fräsmaschine 10 ermittelt werden. Dies kann, wie zuvor beschrieben, an Hand der vorliegenden aktuellen Maschinenparameter 18.1, 18.2, 18.3, 18.4 erfolgen. Die Materialeigenschaften 61 werden dann an die Systemeinheit 40 gesendet, worauf dort von der Recheneinheit 52 die optimierten Soll-Maschinenparameter 71.1, 71.2, 71.3, 71.4 ermittelt werden. Diese können dann ortsaufgelöst an die beiden Fräsmaschinen 10 übermittelt werden.

In einer weiteren, nicht dargestellten Ausführungsform können die Fräsmaschinen 10 auch in direktem Funkkontakt zueinander stehen, so dass auf die Systemeinheit 40 verzichtet werden kann. Die Soll-Maschinenparameter 71.1, 71.2, 71.3, 71.4 werden dann vorzugsweise von einer Fräsmaschine 10 ermittelt und an die zweite Fräsmaschine 10 übersendet. Dabei können für die verschiedenen Teilgebiete F1, F2, F3 angepasste Soll-Maschinenparameter 71.1, 71.2, 71.3, 71.4 bestimmt werden oder es können einheitliche Soll-Maschinenparameter 71.1, 71.2, 71.3, 71.4 für das gesamte Fräsgebiet F bestimmt werden.

Alternativ kann die Verarbeitungseinrichtung 50 auf der Fräsmaschine 10 angeordnet sein. Vorteilhafter Weise kann dabei vorgesehen sein, dass eine Minenkarte in der Speichereinheit 51 elektronisch verarbeitet und somit hinterlegt ist. Zusätzlich verfügt die Fräsmaschine 10 über ein Positionsermittlungssystem (zum Beispiel GPS-System) und ermittelt die Soll- Maschinenparameter 71.1, 71.2, 71.3, 71.4 zusätzlich in Abhängigkeit von der aktuellen Position und den hinterlegten Minendaten.

## Patentansprüche

1. Verfahren zum verschleißoptimierten Betrieb einer Bodenbearbeitungsmaschine, insbesondere einer Straßenfräsmaschine, einem Surface Miner oder dergleichen, mit einstellbaren Maschinenparametern (18.1, 18.2, 18.3, 18.4) eines Maschinenparametersatzes (18) zur Steuerung der Maschine, wobei in Abhängigkeit von zumindest einer Materialeigenschaft (61) des abzutragenden Materials wenigstens ein Soll-Maschinenparameter (71.1, 71.2, 71.3, 71.4) zur Einstellung eines verschleißoptimierten Betriebs ermittelt wird.
**dadurch gekennzeichnet,**
**dass** die zumindest eine Materialeigenschaft (61) während des Betriebes der Bodenbearbeitungsmaschine in Abhängigkeit von Maschinenparametern (18.1, 18.2, 18.3, 18.4) ermittelt wird,
**dass** der Verarbeitungseinrichtung (50) zumindest eine Recheneinheit (52) und eine Speichereinheit (51) zugeordnet sind,
**dass** in der Speichereinheit (51) die zumindest eine Materialeigenschaft (61) kombiniert mit zumindest einem Jobparameter (63) und/oder zumindest einem Vorgabe-Maschinenparameter (62.1, 62.2, 62.3, 62.4) gespeichert wird, dass in der Speichereinheit (51) Kennfelder (64) oder funktionale Zusammenhänge zur Ermittlung des zumindest einen Soll-Maschinenparameters (71.1, 71.2, 71.3, 71.4) aus der zumindest einen Materialeigenschaft (61) und aus dem zumindest einen Jobparameter (63) und/oder aus dem zumindest einen Vorgabe-Maschinenparameter (62.1, 62.2, 62.3, 62.4) hinterlegt sind und dass die Recheneinheit (52) den zumindest einen Soll-Maschinenparameter (71.1, 71.2, 71.3, 71.4) mit Hilfe der Kennfelder (64) oder der funktionalen Zusammenhänge bestimmt.

2. Verfahren nach Anspruch 1,
**dadurch gekennzeichnet,**
**dass** zusätzlich zu dem Verschleiß die Arbeitsleistung der Bodenbearbeitungsmaschine optimiert wird.

3. Verfahren nach Anspruch 1 oder 2,
**dadurch gekennzeichnet,**
**dass** der wenigstens eine Soll-Maschinenparameter (71.1, 71.2, 71.3, 71.4) oder eine Verrechnung desselben einer Betriebsperson, vorzugsweise während des Betriebsprozesses, angegeben, insbesondere angezeigt, oder in einer auf die Bodenbearbeitungsmaschine einwirkenden Steuereinheit (19) verarbeitet wird, um wenigstens einen einstellbaren Maschinenparameter (18.1, 18,2, 18.3, 18.4) einzustellen oder vorzugeben.

4. Verfahren nach Anspruch 3,
**dadurch gekennzeichnet,**
**dass** die Bedienperson vor Beginn oder während eines Arbeitsprozesses der Bodenbearbeitungsmaschine wenigstens eine weitere Materialeigenschaft (61) des abzutragenden Materials und einen oder mehrere Vorgabe-Maschinenparameter (62.1, 62.2, 62.3, 62.4) und/oder Jobparameter (63) in die Verarbeitungseinrichtung (50) eingibt, welche bei der Ermittlung des oder der Soll-Maschinenparameter (71.1, 71.2, 71.3, 71.4) oder der Verrechnung des oder der Soll-Maschinenparameter (71.1, 71.2, 71.3, 71.4) berücksichtigt werden.

5. Verfahren nach einem der Ansprüche 1 bis 4,
**dadurch gekennzeichnet,**
**dass** der Maschinenparametersatz (18) zumindest eine Frästiefe und/oder eine Vorschubgeschwindigkeit und/oder eine Fräswalzendrehzahl und/oder eine Motorleistung und/oder ein Drehmoment umfasst.

6. Verfahren nach einem der Ansprüche 1 bis 5,
**dadurch gekennzeichnet,**
**dass** als Materialeigenschaft (61) eine Abrasivität und/oder eine Härte und/oder ein Materialtyp und/oder eine Materialzusammensetzung und/oder eine Temperatur und/oder ein Schichtaufbau bestimmt wird.

7. Verfahren nach einem der Ansprüche 1 bis 6,
**dadurch gekennzeichnet,**
**dass** als Jobparameter (63) eine geplante Veränderung an dem zu bearbeitenden Material, beispielsweise eine Frässtrecke, ein Fräsvolumen, eine Fräsleistung, eine Fräsarbeit und/oder eine Arbeitszeit verwendet wird.

8. Verfahren nach einem der Ansprüche 1 bis 7,
**dadurch gekennzeichnet,**
**dass** aus der zumindest einen Materialeigenschaft (61) und/oder aus zumindest einem Maschinenparameter (18.1, 18.2, 18.3, 18.4) des Maschinenparametersatzes (18) und/oder aus einer Änderung eines Verschleißzustandes wenigstens eines Bodenbearbeitungswerkzeugs, insbesondere eines Meißels (20) und/oder eines Meißelhalters (22), zumindest ein Kennwert gebildet wird, der ein Verhältnis zwischen einem durch eine erbrachte Fräsarbeit der Bodenbearbeitungsmaschine verursachten Verschleiß des Bodenbearbeitungswerkzeugs und der erbrachten Fräsarbeit darstellt, und dass der zumindest eine Soll-Maschinenparameter (71.1, 71.2, 71.3, 71.4) derart bestimmt wird, dass der Kennwert einen möglichst kleinen Wert annimmt.

9. Verfahren nach Anspruch 8,
**dadurch gekennzeichnet,**
**dass** die erbrachte Fräsarbeit aus der Steuereinheit (19) der Bodenbearbeitungsmaschine ausgegeben wird oder von der Bedienperson in die Verarbeitungseinrichtung (50) eingegeben wird.

10. Verfahren nach Anspruch 8 oder 9,
**dadurch gekennzeichnet,**
**dass** die Änderung des Verschleißzustandes durch eine berührungslose Messmethode oder durch eine Bestimmung des Verschleißzustandes bei einem Wechsel des zumindest einen Bodenbearbeitungswerkzeugs oder aus den erforderlichen Wechselintervallen für das zumindest eine Bodenbearbeitungswerkzeug oder aus der Anzahl der je Wechselintervall auszuwechselnden Bodenbearbeitungswerkzeuge, insbesondere Meißel (20),
bestimmt wird.

11. Verfahren nach einem der Ansprüche 1 bis 10,
**dadurch gekennzeichnet,**
**dass** der aktuelle Verschleißzustand wenigstens eines Bodenbearbeitungswerkzeuges, insbesondere eines Meißels (20) und/oder eines Meißelhalters (22), erfasst wird, dass aus dem aktuellen Verschleißzustand eine Restverschleißkapazität bis zum Erreichen einer vorgegebenen Verschleißgrenze ermittelt wird und dass die Restverschleißkapazität bei der Ermittlung des zumindest einen Soll-Maschinenparameters (71.1, 71.2, 71.3, 71.4) berücksichtigt wird.

12. Verfahren nach einem der Ansprüche 1 bis 11,
**dadurch gekennzeichnet,**
**dass** die Materialeigenschaft/-en (61) während des Betriebes der Bodenbearbeitungsmaschine in Abhängigkeit der Frästiefe und/oder der Vorschubgeschwindigkeit und/oder der Fräswalzendrehzahl und/oder des aktuell an einem Bodenbearbeitungswerkzeug anliegenden Drehmoments und/oder der vom Antriebsmotor aktuell abgegebenen Leistung ermittelt werden.

13. Verfahren nach einem der Ansprüche 4 und 5 bis 12 sofern von 4 abhängig,
**dadurch gekennzeichnet,**
**dass** die Betriebsperson aus einer Liste verschiedener Untergrundkategorien die für den aktuell zu bearbeitenden Untergrund geeignete Untergrundkategorie oder Untergrundkategorien auswählen kann und dass diesen Untergrundkategorien die weiteren Materialeigenschaften (61) zugeordnet sind und/oder dass die Betriebsperson weitere Materialeigenschaften (61) direkt vorgeben kann.

14. Verfahren nach einem der Ansprüche 1 bis 13,
**dadurch gekennzeichnet,**
**dass** die zumindest eine Materialeigenschaft (61) aus einer Änderung des Verschleißzustandes wenigstens eines Bodenbearbeitungswerkzeugs, insbesondere eines Meißels (20) und/oder eines Meißelhalters (22), ermittelt wird.

15. Verfahren nach Anspruch 14,
**dadurch gekennzeichnet,**
**dass** zur Bestimmung der Materialeigenschaft (61) zumindest ein Jobparameter (63) berücksichtigt wird.

16. Verfahren nach einem der Ansprüche 1 bis 15,
**dadurch gekennzeichnet,**
**dass** die Materialeigenschaft-/en (61) mittels zumindest eines Sensors, insbesondere mittels Radar oder Ultraschall, bestimmt werden und/oder dass die Sensoren an der Bodenbearbeitungsmaschine angebracht sind.

17. Verfahren nach einem der Ansprüche 1 bis 16,
**dadurch gekennzeichnet,**
**dass** die Materialeigenschaft-/en (61) des abzutragenden Materials innerhalb eines Arbeitsgebietes (F) örtlich zugeordnet bestimmt werden und dass der zumindest eine Soll-Maschinenparameter (71.1, 71.2, 71.3, 71.4) in Abhängigkeit von der Position innerhalb des Arbeitsgebietes (F) und den dort vorliegenden Materialeigenschaften (61) ermittelt wird.

18. Bodenbearbeitungsmaschine, insbesondere eine Straßenfräsmaschine, ein Surface Miner oder dergleichen, mit zumindest einer Fräswalze (15) mit daran angebrachten Bodenbearbeitungswerkzeugen, einer Höhenverstellung zur Einstellung einer Frästiefe, einer Antriebseinheit, einer Steuereinheit (19) zur Einstellung von Maschinenparametern (18.1, 18.2, 18.3, 18.4), einer Verarbeitungseinrichtung (50) mit einer Recheneinheit (52) und einer damit verbundenen Speichereinheit (51),
**dadurch gekennzeichnet,**
**dass** die zumindest eine Materialeigenschaft (61) während des Betriebes der Bodenbearbeitungsmaschine in Abhängigkeit von Maschinenparametern (18.1, 18.2, 18.3, 18.4) ermittelt wird
**dass** in die Speichereinheit (51) zumindest eine Materialeigenschaft (61) eingespeichert wird, dass in der Speichereinheit (51) zumindest ein Kennfeld (64) und/oder zumindest eine Funktion eingespeichert ist, wobei das Kennfeld (64) und/oder die Funktion einen Zusammenhang zwischen einem Verschleiß der Bodenbearbeitungswerkzeuge und zumindest einer Materialeigenschaft (61) des abzutragenden Materials und zumindest einem Maschinenparameter (18.1, 18.2, 18.3, 18.4) beschreiben, und dass die Recheneinheit (52) dazu ausgelegt ist, an Hand des Kennfeldes (64) und/oder der Funktion und der Materialeigenschaft (61) zumindest einen Soll-Maschinenparameter (71.1, 71.2, 71.3, 71.4) zu ermitteln, bei dem ein geringstmöglicher oder ein vorgegebener Verschleiß der Bodenbearbeitungswerkzeuge vorliegt.

19. Bodenbearbeitungsmaschine nach Anspruch 18,
**dadurch gekennzeichnet,**
**dass** in der Speichereinheit zumindest ein Vorgabe-Maschinenparameter (62.1, 62.2, 62.3, 62.4) einspeicherbar ist, dass das zumindest eine Kennfeld (64) und/oder die Funktion zusätzlich einen Zusammenhang des Verschleißes der Bodenbearbeitungswerkzeuge zu dem Vorgabe-Maschinenparameter (62.1, 62.2, 62.3, 62.4) beschreibt und dass die Recheneinheit (52) den Vorgabe-Maschinenparameter (62.1, 62.2, 62.3, 62.4) bei der Ermittlung des Soll-Maschinenparameters (71.1, 71.2, 71.3, 71.4) berücksichtigt.

20. Bodenbearbeitungsmaschine nach Anspruch 18 oder 19,
**dadurch gekennzeichnet,**
**dass** in der Speichereinheit (51) ein Jobparameter (63) einspeicherbar ist, dass das zumindest eine Kennfeld (64) und/oder die Funktion zusätzlich einen Zusammenhang des Verschleißes der Bodenbearbeitungswerkzeuge zu dem Jobparameter (63) beschreibt und dass die Recheneinheit (52) den Jobparameter (63) bei der Ermittlung des Soll-Maschinenparameters (71.1, 71.2, 71.3, 71.4) berücksichtigt.

21. Bodenbearbeitungsmaschine nach Anspruch 20,
**dadurch gekennzeichnet,**
**dass** als Jobparameter (63) eine geplante Veränderung an dem zu bearbeitenden Material, beispielsweise eine Frässtrecke, ein Fräsvolumen, eine Fräsleistung, eine Fräsarbeit und/oder eine Arbeitszeit einspeicherbar ist.

22. Bodenbearbeitungsmaschine nach einem der Ansprüche 18 bis 21,
**dadurch gekennzeichnet,**
**dass** die Verarbeitungseinrichtung (50) mit der Steuereinheit (19) verbunden ist und dass die Verarbeitungseinrichtung (50) dazu ausgelegt ist, den Soll-Maschinenparameter (71.1, 71.2, 71.3, 71.4) an die Steuereinheit (19) zu übertragen und/oder dass die Verarbeitungseinrichtung (50) mit einer Anzeigeeinheit (17) verbunden ist und dass die Verarbeitungseinrichtung (50) dazu ausgelegt ist, den Soll-Maschinenparameter (71.1, 71.2, 71.3, 71.4) oder eine Verrechnung des Soll-Maschinenparameters (71.1, 71.2, 71.3, 71.4) mit der Anzeigeeinheit (17) anzuzeigen.

23. Bodenbearbeitungsmaschine nach einem der Ansprüche 18 bis 22,
**dadurch gekennzeichnet,**
**dass** der Verarbeitungseinrichtung (50) eine Eingabeeinrichtung mittelbar oder unmittelbar zugeordnet ist.

24. Bodenbearbeitungsmaschine nach einem der Ansprüche 18 bis 23,
**dadurch gekennzeichnet,**
**dass** die Verarbeitungseinrichtung (50) dazu ausgelegt ist, Ist-Maschinenparameter (18.1, 18.2, 18.3, 18.4) und/oder Vorgabe-Maschinenparameter (62.1, 62.2, 62.3, 62.4) und/oder Materialeigenschaften (61) von der Steuereinheit (19) zu empfangen.

25. Bodenbearbeitungsmaschine nach einem der Ansprüche 18 bis 24,
**dadurch gekennzeichnet,**
**dass** die Verarbeitungseinrichtung (50) und/oder die Steuereinheit (19) dazu ausgelegt ist, Materialeigenschaften (61) während des Betriebes der Bodenbearbeitungsmaschine anhand der Frästiefe und/oder der Vorschubgeschwindigkeit und/oder der Fräswalzendrehzahl und/oder des aktuell an einem Bodenbearbeitungswerkzeug anliegenden Drehmoments und/oder der vom Antriebsmotor aktuell abgegebenen Leistung, zu ermitteln.

26. Bodenbearbeitungsmaschine nach einem der Ansprüche 18 bis 25,
**dadurch gekennzeichnet,**
**dass** die Verarbeitungseinrichtung (50) der Bodenbearbeitungsmaschine oder einer separaten Systemeinheit (40) zugeordnet ist.

27. Bodenbearbeitungsmaschine nach einem der Ansprüche 18 bis 26 zur
Durchführung des Verfahrens nach einem der Ansprüche 1 bis 17.

## Claims

1. A method for the wear-optimised operation of a soil working machine, in particular a road milling machine, a surface miner or the like, with adjustable machine parameters (18.1, 18.2, 18.3, 18.4) of a machine parameter set (18) for controlling the machine, wherein, depending on at least one material property (61) of the material to be removed, at least one target machine parameter (71.1, 71.2, 71.3, 71.4) for setting a wear-optimised operation is determined,
**characterised in that**
the at least one material property (61) is determined during operation of the soil working machine depending on machine parameters (18.1, 18.2, 18.3, 18.4),
at least one calculation unit (52) and one memory unit (51) are assigned to the processing device (50),
the at least one material property (61) combined with at least one job parameter (63) and/or at least one default machine parameter (62.1, 62.2, 62.3, 62.4) is stored in the memory unit (51), characteristic fields (64) or functional relationships are stored in the memory unit (51) for determining the at least one target machine parameter (71.1, 71.2, 71.3, 71.4) from the at least one material property (61) and from the at least one job parameter (63) and/or from the at least one default machine parameter (62.1, 62.2, 62.3, 62.4), and the calculation unit (52) determines the at least one target machine parameter (71.1, 71.2, 71.3, 71.4) with the aid of the characteristic fields (64) or the functional relationships.

2. The method according to claim 1,
**characterised in that**
the work performance of the soil working machine is optimised additionally to the wear.

3. The method according to claim 1 or 2,
**characterised in that**
the at least one target machine parameter (71.1, 71.2, 71.3, 71.4) or a calculation of the same is specified, in particular displayed, to an operating person, preferably during the operating process, or is processed in at least one control unit (19) acting on the soil working machine in order to adjust or preset at least one adjustable machine parameter (18.1, 18.2, 18.3, 18.4).

4. The method according to claim 3,
**characterised in that**
before the start of or during a work process of the soil working machine, the operator enters at least one further material property (61) of the material to be removed and one or more default machine parameters (62.1, 62.2, 62.3, 62.4) and/or job parameters (63) into the processing device (50), which are taken into account when determining the target machine parameter(s) (71.1, 71.2, 71.3, 71.4) or calculating the target machine parameter(s) (71.1, 71.2, 71.3, 71.4).

5. The method according to one of claims 1 to 4,
**characterised in that**
the machine parameter set (18) comprises at least a milling depth and/or a feed speed and/or a milling drum speed and/or an engine power and/or a torque.

6. The method according to one of claims 1 to 5,
**characterised in that**
an abrasiveness and/or a hardness and/or a material type and/or a material composition and/or a temperature and/or a layer structure is determined as the material property (61).

7. The method according to one of claims 1 to 6,
**characterised in that**
a planned change to the material to be processed, for example a milling path, a milling volume, a milling performance, a milling work and/or a working time, is used as the job parameter (63).

8. The method according to one of claims 1 to 7,
**characterised in that**
from the at least one material property (61) and/or from at least one machine parameter (18.1, 18.2, 18.3, 18.4) of the machine parameter set (18) and/or from a change in the state of wear of at least one soil working tool, in particular a chisel (20) and/or a chisel holder (22), at least one characteristic value is formed, which represents a relationship between wear of the soil working tool caused by milling work performed by the soil working machine and the milling activity performed, and that the at least one target machine parameter (71.1, 71.2, 71.3, 71.4) is determined in such a way that the characteristic value assumes the smallest possible value.

9. The method according to claim 8,
**characterised in that**
the milling work performed is output from the control unit (19) of the soil working machine or is input into the processing device (50) by the operator.

10. The method according to claim 8 or 9,
**characterised in that**
the change in the state of wear is determined by a non-contact measurement method or by determining the state of wear when changing the at least one soil working tool or from the required change intervals for the at least one soil working tool or from the number of soil working tools, in particular chisels (20), to be replaced per change interval.

11. The method according to one of claims 1 to 10,
**characterised in that**
the current state of wear of at least one soil working tool, in particular a chisel (20) and/or a chisel holder (22), is recorded, a residual wear capacity until a predetermined wear limit is reached is determined from the current wear state, and the residual wear capacity is taken into account when determining the at least one target machine parameter (71.1, 71.2, 71.3, 71.4).

12. The method according to one of claims 1 to 11,
**characterised in that**
the material property(ies) (61) are determined during operation of the soil working machine depending on the milling depth and/or the feed speed and/or the milling drum speed and/or the torque currently applied to a soil working tool and/or the power currently output by the drive motor.

13. The method according to one of claims 4 and 5 to 12 where dependent on claim 4, **characterised in that**
an operator can select the ground category or ground categories suitable for the ground currently being worked from a list of different ground categories, and
the further material properties (61) are assigned to these ground categories and/or the operator can directly specify further material properties (61).

14. The method according to one of claims 1 to 13,
**characterised in that**
the at least one material property (61) is determined from a change in the state of wear of at least one soil working tool, in particular a chisel (20) and/or a chisel holder (22).

15. The method according to claim 14,
**characterised in that**
at least one job parameter (63) is taken into account to determine the material property (61).

16. The method according to one of claims 1 to 15,
**characterised in that**
the material property(ies) (61) are determined by means of at least one sensor, in particular by means of radar or ultrasound, and/or the sensors are attached to the soil working machine.

17. The method according to one of claims 1 to 16,
**characterised in that**
the material property(ies) (61) of the material to be removed within a work area (F) are determined in a locally assigned manner, and the at least one target machine parameter (71.1, 71.2, 71.3, 71.4) is determined dependent on the position within the work area (F) and the material properties (61) present there.

18. A soil working machine, in particular a road milling machine, a surface miner or the like, with at least one milling drum (15) with soil working tools attached thereon, a height adjustment for setting a milling depth, a drive unit, a control unit (19) for setting machine parameters (18.1, 18.2, 18.3, 18.4), a processing device (50) with a calculation unit (52) and a memory unit (51) connected thereto,
**characterised in that**
the at least one material property (61) is determined during operation of the soil working machine depending on machine parameters (18.1, 18.2, 18.3, 18.4),
at least one material property (61) is stored in the memory unit (51), at least one characteristic field (64) and/or at least one function is stored in the memory unit (51), wherein the characteristic field (64) and/or the function describe a relationship between wear of the soil working tools and at least one material property (61) of the material to be removed and at least one machine parameter (18.1, 18.2, 18.3, 18.4), and the calculation unit (52) is designed to use the characteristic field (64) and/or the function and material property (61) to determine at least one target machine parameter (71.1, 71.2, 71.3, 71.4), with which there is minimal or predetermined wear on the soil working tools.

19. The soil working machine according to claim 18,
**characterised in that**
at least one default machine parameter (62.1, 62.2, 62.3, 62.4) can be stored in the memory unit, the at least one characteristic field (64) and/or the function additionally describe a relationship of the wear of the soil working tools to the default machine parameter (62.1, 62.2, 62.3, 62.4), and the calculation unit (52) takes into account the default machine parameter (62.1, 62.2, 62.3, 62.4) when determining the target machine parameter (71.1, 71.2, 71.3, 71.4).

20. The soil working machine according to claim 18 or 19,
**characterised in that**
a job parameter (63) can be stored in the memory unit (51), the at least one characteristic field (64) and/or the function additionally describe a relationship of the wear of the soil working tools to the job parameter (63), and the calculation unit (52) takes into account the job parameters (63) when determining the target machine parameter (71.1, 71.2, 71.3, 71.4).

21. The soil working machine according to claim 20,
**characterised in that**
a planned change to the material to be processed, for example a milling path, a milling volume, a milling performance, a milling work and/or a working time, can be saved as the job parameter (63).

22. The soil working machine according to one of claims 18 to 21,
**characterised in that**
the processing device (50) is connected to the control unit (19), and the processing device (50) is designed to transmit the target machine parameter (71.1, 71.2, 71.3, 71.4) to the control unit (19) and/or that the processing device (50) is connected to a display unit (17), and the processing device (50) is designed to display the target machine parameter (71.1, 71.2, 71.3, 71.4) or a calculation of the target machine parameter (71.1, 71.2, 71.3, 71.4) with the display unit (17).

23. The soil working machine according to one of claims 18 to 22,
**characterised in that**
an input device is directly or indirectly assigned to the processing device (50).

24. The soil working machine according to one of claims 18 to 23,
**characterised in that**
the processing device (50) is designed to receive actual machine parameters (18.1, 18.2, 18.3, 18.4) and/or default machine parameters (62.1, 62.2, 62.3, 62.4) and/or material properties (61) from the control unit (19).

25. The soil working machine according to one of claims 18 to 24,
**characterised in that**
the processing device (50) and/or the control unit (19) is designed to determine material properties (61) during operation of the soil working machine on the basis of the milling depth and/or the feed rate and/or the milling drum speed and/or the torque currently applied to a soil working tool and/or the power currently output by the drive motor.

26. The soil working machine according to one of claims 18 to 25,
**characterised in that**
the processing device (50) is assigned to the soil working machine or a separate system unit (40).

27. The soil working machine according to one of claims 18 to 26 for carrying out the method according to one of claims 1 to 17.

## Revendications

1. Procédé de fonctionnement optimisé contre l'usure d'une machine de travail du sol, en particulier d'une fraiseuse routière, d'une machine d'abattage à ciel ouvert ou analogue, présentant des paramètres de machine (18.1, 18.2, 18.3, 18.4) réglables d'un ensemble de paramètres de machine (18) pour commander la machine, en fonction d'au moins une propriété matérielle (61) de la matière à enlever, au moins un paramètre de machine de consigne (71.1, 71.2, 71.3, 71.4) étant déterminé pour régler un fonctionnement optimisé contre l'usure,
**caractérisé en ce que**
la ou les propriétés matérielles (61) sont déterminées lors du fonctionnement de la machine de travail du sol en fonction des paramètres de machine (18.1, 18.2, 18.3, 18.4),
**en ce qu'**au moins une unité de calcul (52) et une unité de mémoire (51) sont affectées à un dispositif de traitement (50),
**en ce que** dans l'unité de mémoire (51), la ou les propriétés matérielles (61) combinées avec au moins un paramètre de travail (63) et/ou au moins un paramètre de machine prédéterminé (62.1, 62.2, 62.3, 62.4) sont mémorisées, **en ce que** dans l'unité de mémoire (51), des diagrammes caractéristiques (64) ou des relations fonctionnelles sont déposés pour déterminer le ou les paramètres de machine de consigne (71.1, 71.2, 71.3, 71.4) à partir de la ou des propriétés matérielles (61) et à partir du ou des paramètres de travail (63) et/ou à partir du ou des paramètres de machine prédéterminés (62.1, 62.2, 62.3, 62.4) et **en ce que** l'unité de calcul (52) détermine le ou les paramètres de machine de consigne (71.1, 71.2, 71.3, 71.4) à l'aide des diagrammes caractéristiques (64) ou des relations fonctionnelles.

2. Procédé selon la revendication 1,
**caractérisé en ce que**,
en plus du fonctionnement optimisé contre l'usure, la performance de travail de la machine de travail du sol est optimisée.

3. Procédé selon la revendication 1 ou 2,
**caractérisé en ce que**
le ou les paramètres de machine de consigne (71.1, 71.2, 71.3, 71.4) ou un calcul de ceux-ci sont indiqués, en particulier affichés, à un opérateur, de préférence lors du processus de fonctionnement, ou sont traités dans une unité de commande (19) agissant sur la machine de travail du sol pour régler ou prédéfinir au moins un paramètre de machine (18.1, 18.2, 18.3, 18.4) réglable.

4. Procédé selon la revendication 3,
**caractérisé en ce que**
l'opérateur, avant le début ou lors d'un processus de travail de la machine de travail du sol, entre au moins une autre propriété matérielle (61) de la matière à enlever et un ou plusieurs paramètres de machine prédéterminés (62.1, 62.2, 62.3, 62.4) et/ou paramètres de travail (63) dans le dispositif de traitement (50), lesquels sont pris en compte lors de la détermination du ou des paramètres de machine de consigne (71.1, 71.2, 71.3, 71.4) ou du calcul du ou des paramètres de machine de consigne (71.1, 71.2, 71.3, 71.4).

5. Procédé selon l'une quelconque des revendications 1 à 4,
**caractérisé en ce que**
l'ensemble de paramètres de machine (18) comprend au moins une profondeur de fraisage et/ou une vitesse d'avance et/ou une vitesse de rotation de rouleau fraiseur et/ou une puissance motrice et/ou un couple.

6. Procédé selon l'une quelconque des revendications 1 à 5,
**caractérisé en ce que**
un pouvoir abrasif et/ou une dureté et/ou un type de matière et/ou une composition de matière et/ou une température et/ou une structure en couche sont déterminés en tant que propriétés matérielles (61).

7. Procédé selon l'une quelconque des revendications 1 à 6,
**caractérisé en ce que**
une modification planifiée de la matière à traiter, par exemple une trajectoire de fraisage, un volume de fraisage, une performance de fraisage, un travail de fraisage et/ou un temps de travail, est utilisée en tant que paramètre de travail (63).

8. Procédé selon l'une quelconque des revendications 1 à 7,
**caractérisé en ce que**
à partir de de la ou des propriétés matérielles (61) et/ou à partir du ou des paramètres de machine (18.1, 18.2, 18.3, 18.4) de l'ensemble de paramètres de machine (18) et/ou à partir d'une modification de l'état d'usure d'au moins un outil de travail du sol, en particulier d'un burin (20) et/ou d'un porte-burin (22), au moins une valeur caractéristique est formée, laquelle représente un rapport entre une usure de l'outil de travail du sol provoquée par un travail de fraisage de la machine de travail du sol et le travail de fraisage effectué, et **en ce que** le ou les paramètres de machine de consigne (71.1, 71.2, 71.3, 71.4) sont déterminés de telle sorte que la valeur caractéristique prenne la plus petite valeur possible.

9. Procédé selon la revendication 8,
**caractérisé en ce que**
le travail de fraisage effectué est sorti de l'unité de commande (19) de la machine de travail du sol ou est entré par l'opérateur dans le dispositif de traitement (50).

10. Procédé selon la revendication 8 ou 9,
**caractérisé en ce que**
le changement de l'état d'usure est déterminé à l'aide d'une méthode de mesure sans contact ou à l'aide d'une détermination de l'état d'usure lors d'un remplacement du ou des outils de travail du sol ou à partir des intervalles de remplacement requis pour le ou les outils de travail du sol ou à partir du nombre d'outils de travail du sol à remplacer par intervalle de remplacement respectif, en particulier des burins (20).

11. Procédé selon l'une quelconque des revendications 1 à 10,
**caractérisé en ce que**
l'état d'usure actuel d'au moins un outil de travail du sol, en particulier d'un burin (20) et/ou d'un porte-burin (22), est enregistré, **en ce que**, à partir de l'état d'usure actuel, une capacité d'usure résiduelle, jusqu'à ce qu'une limite d'usure prédéterminée soit atteinte, est déterminée et **en ce que** la capacité d'usure résiduelle est prise en compte lors de la détermination du ou des paramètres de machine de consigne (71.1, 71.2, 71.3, 71.4).

12. Procédé selon l'une quelconque des revendications 1 à 11,
**caractérisé en ce que**
la ou les propriétés matérielles (61) sont déterminées lors du fonctionnement de la machine de travail du sol en fonction de la profondeur de fraisage et/ou de la vitesse d'avance et/ou de la vitesse de rotation de rouleau fraiseur et/ou du couple appliqué actuellement à un outil de travail du sol et/ou de la puissance produite actuellement par le moteur d'entraînement.

13. Procédé selon l'une quelconque des revendications 4 et 5 à 12, si dépendant de la revendication 4,
**caractérisé en ce que**
l'opérateur peut sélectionner, dans une liste de différentes catégories de sous-sol, la catégorie de sous-sol ou les catégories de sous-sol appropriées au sous-sol à traiter actuellement, et **en ce que** les autres propriétés matérielles (61) sont affectées auxdites catégories de sous-sol et/ou **en ce que** l'opérateur peut directement prédéfinir d'autres propriétés matérielles (61).

14. Procédé selon l'une quelconque des revendications 1 à 13,
**caractérisé en ce que**
la ou les propriétés matérielles (61) sont déterminées à partir d'un changement de l'état d'usure d'au moins un outil de travail du sol, en particulier d'un burin (20) et/ou d'un porte-burin (22).

15. Procédé selon la revendication 14,
**caractérisé en ce que**,
pour déterminer la propriété matérielle (61), au moins un paramètre de travail (63) est pris en compte.

16. Procédé selon l'une quelconque des revendications 1 à 15,
**caractérisé en ce que**
la ou les propriétés matérielles (61) sont déterminées au moyen d'au moins un capteur, en particulier au moyen d'un radar ou par ultrasons, et/ou **en ce que** les capteurs sont installés sur la machine de travail du sol.

17. Procédé selon l'une quelconque des revendications 1 à 16,
**caractérisé en ce que**
la ou les propriétés matérielles (61) de la matière à enlever sont déterminées localement affectées à l'intérieur d'une zone de travail (F) et **en ce que** le ou les paramètres de machine de consigne (71.1, 71.2, 71.3, 71.4) sont déterminés en fonction de la position à l'intérieur de la zone de travail (F) et des propriétés matérielles (61) présentes dans ladite zone de travail.

18. Machine de travail du sol, en particulier une fraiseuse routière, une machine d'abattage à ciel ouvert ou analogue, comprenant au moins un rouleau fraiseur (15) comportant des outils de travail du sol installés sur celui-ci, un réglage de la hauteur pour régler une profondeur de fraisage, une unité d'entraînement, une unité de commande (19) pour régler les paramètres de machine (18.1, 18.2, 18.3, 18.4), un dispositif de traitement (50) comportant une unité de calcul (52) et une unité de mémoire (51) raccordée à celle-ci,
**caractérisé en ce que**
la ou les propriétés matérielles (61) sont déterminées lors du fonctionnement de la machine de travail du sol en fonction des paramètres de machine (18.1, 18.2, 18.3, 18.4),
**en ce que**, dans l'unité de mémoire (51), au moins une propriété matérielle (61) est mémorisée, **en ce que**, dans l'unité de mémoire (51), au moins un diagramme caractéristique (64) et/ou au moins une fonction sont mémorisés, le diagramme caractéristique (64) et/ou la fonction décrivant une relation entre l'usure des outils de travail du sol et au moins une propriété matérielle (61) de la matière à enlever et au moins un paramètre de machine (18.1, 18.2, 18.3, 18.4), et **en ce que** l'unité de calcul (52) est conçue pour déterminer, en fonction du diagramme caractéristique (64) et/ou de la fonction et de la propriété matérielle (61), au moins un paramètre de machine de consigne (71.1, 71.2, 71.3, 71.4), lequel représente une usure la plus minime possible ou prédéterminée des outils de travail du sol.

19. Machine de travail du sol selon la revendication 18,
**caractérisée en ce que**
dans l'unité de mémoire, au moins un paramètre de machine prédéterminé (62.1, 62.2, 62.3, 62.4) peut être mémorisé, **en ce que** le ou les diagrammes caractéristiques (64) et/ou la fonction décrivent en plus une relation entre l'usure des outils de travail du sol et le paramètre de machine prédéterminé (62.1, 62.2 , 62.3, 62.4) et **en ce que** l'unité de calcul (52) prend en compte le paramètre de machine prédéterminé (62.1, 62.2, 62.3, 62.4) lors de la détermination du paramètre de machine de consigne (71.1, 71.2, 71.3, 71.4).

20. Machine de travail du sol selon la revendication 18 ou 19,
**caractérisée en ce que**
dans l'unité de mémoire (51), un paramètre de travail (63) peut être mémorisé, **en ce que** le ou les diagrammes caractéristiques (64) et/ou la fonction décrivent en plus une relation entre l'usure des outils de travail du sol et le paramètre de travail (63) et **en ce que** l'unité de calcul (52) prend en compte le paramètre de travail (63) lors de la détermination du paramètre de machine de consigne (71.1, 71.2, 71.3, 71.4).

21. Machine de travail du sol selon la revendication 20,
**caractérisée en ce que**
une modification planifiée de la matière à traiter, par exemple une trajectoire de fraisage, un volume de fraisage, une performance de fraisage, un travail de fraisage et/ou un temps de travail, peut être mémorisée en tant que paramètre de travail (63).

22. Machine de travail du sol selon l'une quelconque des revendications 18 à 21,
**caractérisée en ce que**
le dispositif de traitement (50) est raccordé à l'unité de commande (19) et **en ce que** ledit dispositif de traitement (50) est conçu pour transmettre le paramètre de machine de consigne (71.1, 71.2, 71.3, 71.4) à l'unité de commande (19) et/ou **en ce que** ledit dispositif de traitement (50) est raccordé à une unité d'affichage (17) et **en ce que** ledit dispositif de traitement (50) est conçu pour afficher le paramètre de machine de consigne (71.1, 71.2, 71.3, 71.4) ou un calcul du paramètre de machine de consigne (71.1, 71.2, 71.3, 71.4) à l'aide de l'unité d'affichage (17).

23. Machine de travail du sol selon l'une quelconque des revendications 18 à 22,
**caractérisée en ce que**
le dispositif de traitement (50) est affecté directement ou indirectement à un dispositif d'entrée.

24. Machine de travail du sol selon l'une quelconque des revendications 18 à 23,
**caractérisée en ce que**
le dispositif de traitement (50) est conçu pour recevoir les paramètres de machine réels (18.1, 18.2, 18.3, 18.4) et/ou les paramètres de machine prédéterminés (62.1, 62.2, 62.3, 62.4) et/ou les propriétés matérielles (61) de l'unité de commande (19).

25. Machine de travail du sol selon l'une quelconque des revendications 18 à 24,
**caractérisée en ce que**
le dispositif de traitement (50) et/ou l'unité de commande (19) sont conçus pour déterminer les propriétés matérielles (61) lors du fonctionnement de la machine de travail du sol en fonction de la profondeur de fraisage et/ou de la vitesse d'avance et/ou de la vitesse de rotation de rouleau fraiseur et/ou du couple appliqué actuellement à un outil de travail du sol et/ou de la puissance produite actuellement par le moteur d'entraînement.

26. Machine de travail du sol selon l'une quelconque des revendications 18 à 25,
**caractérisée en ce que**
le dispositif de traitement (50) est affecté à la machine de travail du sol ou à une unité système (40) séparée.

27. Machine de travail du sol selon l'une quelconque des revendications 18 à 26 permettant la mise en oeuvre du procédé selon l'une quelconque des revendications 1 à 17.
